# EUROPÄISCHE PATENTSCHRIFT

(11) **EP 4 094 407 B1**
(45) Veröffentlichungstag und Bekanntmachung des Hinweises auf die Patenterteilung: **12.03.2025**
(21) Anmeldenummer: 21700921.6
(22) Anmeldetag: 18.01.2021
(51) Int. Cl.: H04L 12/40

(54) **SENDE-/EMPFANGSEINRICHTUNG UND KOMMUNIKATIONSSTEUEREINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
TRANSMITTING/RECEIVING DEVICE AND COMMUNICATION CONTROL DEVICE FOR A SUBSCRIBER STATION OF A SERIAL BUS SYSTEM, AND METHOD FOR COMMUNICATION IN A SERIAL BUS SYSTEM
DISPOSITIF D'ÉMISSION/RÉCEPTION ET DISPOSITIF DE COMMANDE DE COMMUNICATION POUR UNE STATION D'ABONNÉ D'UN SYSTÈME DE BUS SÉRIE, ET PROCÉDÉ DE COMMUNICATION DANS UN SYSTÈME DE BUS SÉRIE

(30) Priorität: 23.01.2020 DE 102020200802
(43) Veröffentlichungstag der Anmeldung: 30.11.2022
(73) Patentinhaber: Robert Bosch GmbH, 70442 Stuttgart (DE)
(72) Erfinder: HARTWICH, Florian, 72762 Reutlingen (DE); WALKER, Steffen, 72770 Reutlingen (DE); MUTTER, Arthur, 73765 Neuhausen (DE)
(86) Internationale Anmeldenummer: PCT/EP2021/050940
(87) Internationale Veröffentlichungsnummer: WO 2021/148349

(56) Entgegenhaltungen:
- EP-A1- 2 800 316
- US-A1- 2016 344 552

## Beschreibung

### Technisches Gebiet

Die vorliegende Erfindung betrifft eine Sende-/Empfangseinrichtung und eine Kommunikationssteuereinrichtung für eine Teilnehmerstation eines seriellen Bussystems und ein Verfahren zur Kommunikation in einem seriellen Bussystem, das mit hoher Datenrate und großer Fehlerrobustheit arbeitet.

### Stand der Technik

Für die Kommunikation zwischen Sensoren und Steuergeräten, beispielsweise in Fahrzeugen, wird häufig ein Bussystem eingesetzt, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., als analoge Signale übertragen.

Jeder Busteilnehmer des Bussystems ist mit einer Sende-/Empfangseinrichtung an den Bus angeschlossen. In der Sende-/Empfangseinrichtung ist mindestens ein Empfangskomparator vorgesehen, der die analogen Signale von dem Bus empfängt und in ein digitales Signal umsetzt. Der Inhalt des digitalen Signals kann von einer Kommunikationssteuereinrichtung mit Hilfe ihres Protokollkontrollers interpretiert werden. Zudem kann die Kommunikationssteuereinrichtung ein Signal für die Übertragung auf dem Bus erstellen und mit der Sende-/Empfangseinrichtung auf den Bus senden. Auf diese Weise sind zwischen den Busteilnehmern Informationen austauschbar.

Um Daten mit höherer Bitrate über den Bus übertragen zu können als bei CAN, wurde im CAN FD Nachrichten-Format sowie im CAN XL Nachrichten-Format eine Option zur Umschaltung auf eine höhere Bitrate innerhalb einer Nachricht geschaffen. Bei solchen Techniken wird die maximal mögliche Datenrate durch Einsatz einer höheren Taktung im Bereich der Datenfelder im Vergleich zu CAN gesteigert. Dabei wird bei CAN FD-Rahmen oder CAN FD-Nachrichten die maximal mögliche Datenrate über einen Wert von 1 MBit/s hinaus gesteigert. Zudem ist die Nutzdatenlänge von 8 auf bis zu 64 Bytes erweitert. Ähnliches gilt für CAN XL, bei welchem die Schnelligkeit der Datenübertragung in den Bereich von zum Beispiel 10 BaseT1-S Ethernet gesteigert sein soll und die bisher mit CAN FD erreichte Nutzdatenlänge von bis zu 64 Bytes größer sein soll. Dadurch kann die Robustheit des CAN oder CAN FD basierten Kommunikationsnetzwerks vorteilhaft beibehalten werden.

Für die Übertragung mit der höheren Bitrate ist die bisherige Betriebsart der Sende-/Empfangseinrichtung von einer Betriebsart für die Übertragung mit der niedrigeren Bitrate (Betriebsart Z_SL) in eine andere Betriebsart umzuschalten. Dabei ist zu berücksichtigen, dass bei der Übertragung mit der höheren Bitrate nur eine der Teilnehmerstationen des Bussystems Sender der Nachricht ist, wohingegen alle anderen Teilnehmerstationen nur Empfänger der Nachricht sind. Daher wird bei der Signalisierung der Betriebsart (Z_F) für die höhere Bitrate unterschieden, ob die Teilnehmerstation nur Empfänger (Betriebsart Z_F_RX ) oder auch Sender (Betriebsart Z_F_TX) ist, um die Betriebsart ihrer Sende-/Empfangseinrichtung entsprechend zu schalten.

Denkbar ist, dass die Kommunikationssteuereinrichtung der Sende-/Empfangseinrichtung die Information, in welche Betriebsart die Sende-/Empfangseinrichtung zu schalten ist, signalisiert. Dadurch ist der Kommunikationssteuereinrichtung jedoch nicht bekannt, ob die Sende-/Empfangseinrichtung die Signalisierung der Umschaltung der Betriebsart überhaupt mitbekommt und ob die Sende-/Empfangseinrichtung die Signalisierung der Umschaltung der Betriebsart richtig interpretiert bzw. umsetzt.

EP 2 800 316 A1 bezieht sich auf ein Bussystem, in dem gemäß CAN FD kommuniziert wird mit Einrichtungen und einem Verfahren gemäß den Oberbegriffen der Ansprüche 1, 13 und 15.

### Offenbarung der Erfindung

Daher ist es Aufgabe der vorliegenden Erfindung, eine Sende-/Empfangseinrichtung und eine Kommunikationssteuereinrichtung für eine Teilnehmerstation eines seriellen Bussystems und ein Verfahren zur Kommunikation in einem seriellen Bussystem bereitzustellen, welche die zuvor genannten Probleme lösen. Insbesondere sollen eine Sende-/Empfangseinrichtung und eine Kommunikationssteuereinrichtung für eine Teilnehmerstation eines seriellen Bussystems und ein Verfahren zur Kommunikation in einem seriellen Bussystem bereitgestellt werden, bei welchen die Umschaltung der Betriebsart der Sende-/Empfangseinrichtung sowohl mit hoher Robustheit durchführbar als auch die Durchführung unaufwändig in Bezug auf Zeit und Kosten überprüfbar ist.

Die Aufgabe wird durch eine Sende-/Empfangseinrichtung für eine Teilnehmerstation eines seriellen Bussystems mit den Merkmalen von Anspruch 1 gelöst. Die Sende-/Empfangseinrichtung hat einen ersten Anschluss zum Empfang eines Sendesignals von einer Kommunikationssteuereinrichtung, ein Sendemodul zum Senden des Sendesignals auf einen Bus des Bussystems, bei welchem Bussystem zum Austausch von Nachrichten zwischen Teilnehmerstationen des Bussystems mindestens eine erste Kommunikationsphase und eine zweite Kommunikationsphase verwendet werden, ein Empfangsmodul zum Empfang des Signals von dem Bus, wobei das Empfangsmodul ausgestaltet ist, aus dem von dem Bus empfangenen Signal ein digitales Empfangssignal zu erzeugen, einen zweiten Anschluss zum Senden des digitalen Empfangssignals an die Kommunikationssteuereinrichtung und zum Empfang eines Betriebsart-Umschaltsignals von der Kommunikationssteuereinrichtung, und einen Umschaltung-Rückmeldeblock zur Ausgabe einer Rückmeldung über eine erfolgte Umschaltung der Betriebsart aufgrund des Betriebsart-Umschaltsignals , wobei der Umschaltung-Rückmeldeblock mit dem ersten Anschluss verbunden ist, zur Ausgabe der Rückmeldung über den ersten Anschluss an die Kommunikationssteuereinrichtung, wie in Anspruch 1 beschrieben.

Die Sende-/Empfangseinrichtung kann der Kommunikationssteuereinrichtung über den bereits vorhandenen ersten Anschluss in dem Sendesignal eine Rückmeldung geben, ob die Sende-/Empfangseinrichtung die Signalisierung der Umschaltung der Betriebsart mitbekommen hat, und wie die Signalisierung interpretiert wurde. Anhand dessen kann die Kommunikationssteuereinrichtung prüfen, ob die Sende-/Empfangseinrichtung für den derzeitigen Betriebszustand bzw. die derzeitige Kommunikationsphase richtig geschaltet ist oder nicht. Dadurch wird die Umschaltung der Betriebsart der Sende-/Empfangseinrichtung überprüfbar, was die Robustheit der des Bussystems steigert. Grund dafür ist, dass die Kommunikationssteuereinrichtung im Falle eines Fehlers gezielt reagieren kann, da sie das Problem kennt.

Eine hohe Robustheit der Rückmeldung ist auch dadurch gegeben, dass die Kommunikationssteuereinrichtung der Sende-/Empfangseinrichtung nicht über den ersten Anschluss, sondern über den zweiten Anschluss in dem Empfangssignal signalisiert, dass eine Umschaltung der Betriebsart vorzunehmen ist. Dadurch erfolgen die Signalisierung der Umschaltung der Betriebsart und die Signalisierung der Rückmeldung, ob die Umschaltung der Betriebsart durchgeführt worden ist oder nicht, über zwei verschiedene Kanäle bzw. Übertragungswege.

Im Ergebnis ist kein zusätzlicher Anschluss oder ein Protokollkontroller bei der Sende-/Empfangseinrichtung erforderlich. Alles dies spart deutlich Siliziumfläche und damit Ressourcen, Platz und Kosten.

Die Rückmeldung der Umschaltung der Betriebsart an die Kommunikationssteuereinrichtung ermöglicht außerdem, dass die Kommunikationssteuereinrichtung im Fehlerfall entsprechend reagieren kann. Beispielsweise kann die Kommunikationssteuereinrichtung einen Fehlerrahmen senden, um die Übertragung des Rahmens abzubrechen. Dadurch kann die Übertragung mit fehlerhaft eingestellten Buskomponenten schnellstmöglich abgebrochen werden. Dies steigert die im Bussystem übertragbare Nettodatenrate. Dadurch wird die Kommunikation in dem Bussystem robuster.

Die Rückmeldung der Umschaltung der Betriebsart an die Kommunikationssteuereinrichtung hilft bei der Fehlersuche, da die Kommunikationssteuereinrichtung weiß, ob die Sende-/Empfangseinrichtung den Zustand wechseln konnte. Die Kommunikationssteuereinrichtung kann zudem via Software darauf hinweisen, dass die angeschlossene Kommunikationssteuereinrichtung bereits K-mal die Umschaltung nicht durchführen konnte, wobei K eine natürliche Zahl einschließlich 0 ist. Der Wert für K kann als Anzeichen gewertet werden, wie bald die Sende-/Empfangseinrichtung ausfallen könnte. Um dem Ausfall vorzubeugen, kann die Sende-/Empfangseinrichtung dann rechtzeitig vor dem Ausfall in einer Werkstatt ausgetauscht werden. Dies erhöht die Sicherheit des Systems, in welchem das Bussystem eingesetzt ist.

Außerdem kann mit der Sende-/Empfangseinrichtung in einer der Kommunikationsphasen eine von CAN bekannte Arbitration beibehalten werden und dennoch die Übertragungsrate gegenüber CAN oder CAN FD nochmals beträchtlich gesteigert werden. Dies kann dadurch erreicht werden, dass zwei Kommunikationsphasen mit unterschiedlicher Bitrate verwendet werden und der Beginn der zweiten Kommunikationsphase, in welcher die Nutzdaten mit höherer Bitrate als in der Arbitration übertragen werden, für die Sende-/Empfangseinrichtung sicher kenntlich gemacht und überprüft wird. Als Folge davon ist eine deutliche Steigerung der Bitrate und damit der Übertragungsgeschwindigkeit von Sender zum Empfänger realisierbar. Hierbei ist jedoch gleichzeitig eine große Fehlerrobustheit gewährleistet.

Das von der Sende-/Empfangseinrichtung durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Sende-/Empfangseinrichtung sind in den abhängigen Ansprüchen angegeben.

Der Umschaltung-Rückmeldeblock kann aufweisen ein Betriebsart-Erfassungsmodul zur Erfassung aus den Ausgangssignalen des Sendemoduls und des Empfangsmoduls, in welche Betriebsart das Sendemodul und das Empfangsmodul geschaltet sind, und ein Betriebsart-Rückmeldemodul zur Auswertung eines von dem Betriebsart-Erfassungsmodul ausgegebenen Betriebsart-Statussignals, wobei das Betriebsart-Rückmeldemodul ausgestaltet sein kann, mit einem Ergebnis der Auswertung zu entscheiden, ob das Betriebsart-Rückmeldemodul über das digitale Sendesignal eine Rückmeldung an die Kommunikationssteuereinrichtung geben muss, und wann die Rückmeldung gesendet werden muss.

Gemäß einer speziellen Ausgestaltung kann das Betriebsart-Rückmeldemodul ausgestaltet sein, die Rückmeldung in das digitale Sendesignal nach der Umschaltung der Betriebsart einzufügen, die mit dem Betriebsart-Umschaltsignal signalisiert wurde.

Gemäß einer anderen speziellen Ausgestaltung kann das Betriebsart-Rückmeldemodul ausgestaltet sein, die Rückmeldung in das digitale Empfangssignal nach dem Betriebsart-Umschaltsignal, jedoch vor der Umschaltung der Betriebsart einzufügen, die mit dem Betriebsart-Umschaltsignal signalisiert wurde.

Gemäß einer Ausgestaltung ist das Betriebsart-Rückmeldemodul ausgestaltet, die Rückmeldung am Anfang stärker zu treiben als am Ende der Rückmeldung.

Denkbar ist, dass das Betriebsart-Rückmeldemodul ausgestaltet ist, die Rückmeldung in das digitale Sendesignal als mindestens ein Puls mit einem Wert einzufügen, der invers zu einem Wert des digitalen Sendesignals ist.

Hierbei kann der mindestens eine Puls bis zu einem folgenden Flankenwechsel, der in dem digitalen Empfangssignal folgt, am Bus dauern.

Die Sende-/Empfangseinrichtung kann zudem einen Betriebsart-Umschaltblock aufweisen, der mit dem zweiten Anschluss verbunden ist, um das an dem zweiten Anschluss von der Kommunikationssteuereinrichtung empfangene Betriebsart-Umschaltsignal auszuwerten, wobei der Betriebsart-Umschaltblock ausgestaltet ist, das Sendemodul und/oder das Empfangsmodul abhängig von einem Ergebnis der Auswertung in eine von mindestens drei verschiedenen Betriebsarten zu schalten.

Möglicherweise ist das an dem zweiten Anschluss von der Kommunikationssteuereinrichtung empfangene Betriebsart-Umschaltsignal mindestens ein Puls mit einem Wert, der invers zu einem Wert des digitalen Empfangssignals ist, wobei der Betriebsart-Umschaltblock ausgestaltet ist, das Empfangsmodul von der ersten Betriebsart in die zweite Betriebsart zu schalten, wenn das Umschaltsignal einen Puls aufweist, wobei der Betriebsart-Umschaltblock ausgestaltet ist, das Sendemodul und das Empfangsmodul von der ersten Betriebsart in die dritte Betriebsart zu schalten, wenn das Umschaltsignal zwei Pulse aufweist. Hierbei ist es denkbar, dass die Sende-/Empfangseinrichtung in der zweiten Betriebsart nicht der Sender der Nachricht in der zweiten Kommunikationsphase ist, und dass die Sende-/Empfangseinrichtung in der dritten Betriebsart Sender der Nachricht in der zweiten Kommunikationsphase ist.

Gemäß einer speziellen Ausgestaltung ist die Sende-/Empfangseinrichtung ausgestaltet, als Rückmeldung über den ersten Anschluss mindestens einen Puls zu senden, der sich von dem mindestens einen Puls des Betriebsart-Umschaltsignals an dem zweiten Anschluss in Polarität und oder Anzahl der Pulse unterscheidet.

Die zuvor genannte Aufgabe wird zudem durch eine Kommunikationssteuereinrichtung für eine Teilnehmerstation eines seriellen Bussystems mit den Merkmalen von Anspruch 13 gelöst. Die Kommunikationssteuereinrichtung hat ein Kommunikationssteuermodul zum Erzeugen eines Sendesignals zum Steuern einer Kommunikation der Teilnehmerstation mit mindestens einer anderen Teilnehmerstation des Bussystems, bei welchem Bussystem zum Austausch von Nachrichten zwischen Teilnehmerstationen des Bussystems mindestens eine erste Kommunikationsphase und eine zweite Kommunikationsphase verwendet werden, einen ersten Anschluss zum Senden des Sendesignals an eine Sende-/Empfangseinrichtung, die zum Senden des Sendesignals auf einen Bus des Bussystems ausgestaltet ist, einen zweiten Anschluss zum Empfangen eines digitalen Empfangssignals von der Sende-/Empfangseinrichtung, wobei die Kommunikationssteuereinrichtung zum Erzeugen eines zusätzlichen Signals ausgestaltet ist, welches der Sende-/Empfangseinrichtung anzeigt, dass von der derzeitigen Betriebsart in eine andere Betriebsart von mindestens drei verschiedenen Betriebsarten zu schalten ist, und welches eine interne Kommunikation zwischen dem Kommunikationssteuermodul und der Sende-/Empfangseinrichtung realisiert, und wobei das Kommunikationssteuermodul ausgestaltet ist, das zusätzliche Signal über den zweiten Anschluss in dem digitalen Empfangssignal an die Sende-/Empfangseinrichtung zu senden, und wobei das Kommunikationssteuermodul ausgestaltet ist, über den ersten Anschluss in dem Sendesignal von der Sende-/Empfangseinrichtung eine Rückmeldung über eine erfolgte Umschaltung der Betriebsart aufgrund des Betriebsart-Umschaltsignals zu empfangen und die Rückmeldung auszuwerten, wie in Anspruch 13 beschrieben.

Die Kommunikationssteuereinrichtung bietet dieselben Vorteile, wie sie zuvor in Bezug auf die Sende-/Empfangseinrichtung genannt sind.

Möglicherweise ist das Sendemodul ausgestaltet, in der ersten Kommunikationsphase Bits der Signale auf den Bus mit einer ersten Bitzeit zu treiben, die um mindestens den Faktor 10 größer als eine zweite Bitzeit von Bits ist, die das Sendemodul in der zweiten Kommunikationsphase auf den Bus treibt. Hierbei kann das Betriebsart-Umschaltsignal über den zweiten Anschluss zur Signalisierung, dass die Umschaltung der Betriebsart vorzunehmen ist, mindestens einen Puls mit einer Zeitdauer haben, die kleiner als die erste Bitzeit ist und länger als die zweite Bitzeit ist, oder mindestens einen Puls mit einer Pulszeitdauer haben, die in etwa gleich der zweiten Bitzeit ist oder kleiner als die zweite Bitzeit ist. Außerdem kann hierbei die Rückmeldung über den ersten Anschluss zur Signalisierung, dass die Betriebsart umgeschaltet wurde, mindestens einen Puls mit einer Zeitdauer haben, die kleiner als die erste Bitzeit ist, und größer als die zweite Bitzeit ist, oder mindestens einen Puls mit einer Pulszeitdauer haben, die in etwa gleich der zweiten Bitzeit ist oder kleiner als die zweite Bitzeit ist.

Gemäß einer Option ist das in der ersten Kommunikationsphase von dem Bus empfangene Signal mit einem anderen Physical Layer erzeugt als das in der zweiten Kommunikationsphase von dem Bus empfangene Signal.

Denkbar ist, dass in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Sende-/Empfangseinrichtung und die zuvor beschriebene Kommunikationssteuereinrichtung können Teil einer Teilnehmerstation eines Bussystems sein, das zudem einen Bus und mindestens zwei Teilnehmerstationen umfasst, welche über den Bus derart miteinander verbunden sind, dass sie seriell miteinander kommunizieren können. Hierbei weist mindestens eine der mindestens zwei Teilnehmerstationen eine zuvor beschriebene Sende-/Empfangseinrichtung sowie eine zuvor beschriebene Kommunikationssteuereinrichtung auf.

Die zuvor genannte Aufgabe wird zudem durch ein Verfahren zur Kommunikation in einem seriellen Bussystem nach Anspruch 15 gelöst. Das Verfahren wird mit einer Sende-/Empfangseinrichtung einer Teilnehmerstation für ein Bussystem ausgeführt, bei welchem zum Austausch von Nachrichten zwischen Teilnehmerstationen des Bussystems mindestens eine erste Kommunikationsphase und eine zweite Kommunikationsphase verwendet werden, wobei die Teilnehmerstation ein Sendemodul, ein Empfangsmodul, einen Betriebsart-Umschaltblock, einen Umschaltung-Rückmeldeblock, einen ersten Anschluss und einen zweiten Anschluss aufweist, und wobei das Verfahren die Schritte aufweist, Empfangen, mit dem Empfangsmodul, eines Signals von dem Bus des Bussystems, Erzeugen, mit dem Empfangsmodul, aus dem von dem Bus empfangenen Signal eines digitalen Empfangssignals und Ausgeben des digitalen Empfangssignals an dem zweiten Anschluss, Empfangen, mit dem Betriebsart-Umschaltblock, der mit dem zweiten Anschluss verbunden ist, des Betriebsart-Umschaltsignals an dem zweiten Anschluss von der Kommunikationssteuereinrichtung, um das empfangene Betriebsart-Umschaltsignal für eine Umschaltung der Betriebsart auszuwerten, und Ausgeben, mit dem Umschaltung-Rückmeldeblock, der mit dem ersten Anschluss verbunden ist, einer Rückmeldung über eine erfolgte Umschaltung der Betriebsart aufgrund des Betriebsart-Umschaltsignals über den ersten Anschluss an die Kommunikationssteuereinrichtung, wie in Anspruch 15 beschrieben.

Das Verfahren bietet dieselben Vorteile, wie sie zuvor in Bezug auf die Sende-/Empfangseinrichtung und/oder die Kommunikationssteuereinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 ein vereinfachtes schematisches Blockschaltbild einer Teilnehmerstation des Bussystems gemäß dem ersten Ausführungsbeispiel;
Fig. 4 bis Fig. 6 ein Beispiel für Signale bei dem ersten Ausführungsbeispiel in Bezug auf eine Rückmeldung einer Betriebsart-Umschaltung der Sende-/Empfangseinrichtung in einer Teilnehmerstation, die bei einer zweiten Kommunikationsphase (Datenphase) als Sender agiert; und
Fig. 7 bis Fig. 9 ein Beispiel für Signale bei dem ersten Ausführungsbeispiel in Bezug auf eine Rückmeldung einer Betriebsart-Umschaltung der Sende-/Empfangseinrichtung in einer Teilnehmerstation, die bei einer zweiten Kommunikationsphase (Datenphase) nur als Empfänger agiert.

In den Figuren sind gleiche oder funktionsgleiche Elemente, sofern nichts anderes angegeben ist, mit denselben Bezugszeichen versehen.

### Beschreibung der Ausführungsbeispiele

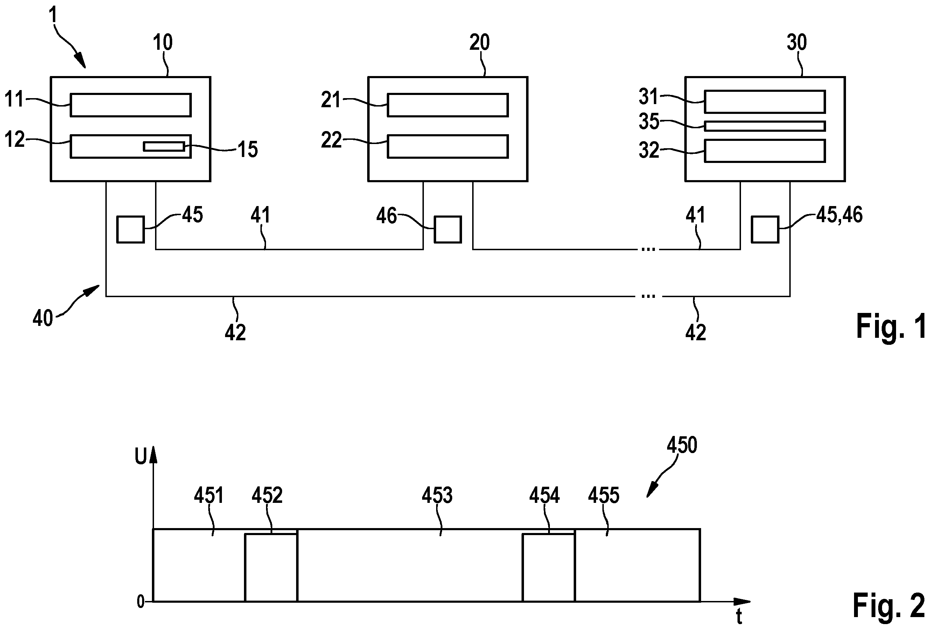

Fig. 1 zeigt als Beispiel ein Bussystem 1, das insbesondere grundlegend für ein CAN-Bussystem, ein CAN FD-Bussystem, ein CAN FD-Nachfolge-Bussystem, und/oder Abwandlungen davon, ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und einen Umschaltung-Rückmeldeblock 15. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32 und einen Umschaltung-Rückmeldeblock 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

In jeder Teilnehmerstation 10, 20, 30 werden die Nachrichten 45, 46 kodiert in Form von Rahmen über eine TXD-Leitung und eine RXD-Leitung bitweise zwischen der jeweiligen Kommunikationssteuereinrichtung 11, 21, 31 und der zugehörigen Sende-/Empfangseinrichtungen 12, 22, 32 ausgetauscht. Dies ist nachfolgend genauer beschrieben.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtungen 11, 31 erstellen und lesen erste Nachrichten 45, die beispielsweise modifizierte CAN Nachrichten 45 sind, die nachfolgend auch CAN XL Nachrichten 45 genannt werden. Hierbei sind die modifizierten CAN Nachrichten 45 oder CAN XL Nachrichten 45 auf der Grundlage eines CAN FD-Nachfolgeformats aufgebaut, das in Bezug auf Fig. 2 detaillierter beschrieben ist. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtungen 12, 32 bereitzustellen oder von dieser zu empfangen. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Protokollkontroller bzw. CAN-Controller nach ISO 11898-1:2015 ausgeführt sein, insbesondere wie ein CAN FD toleranter Classical CAN-Controller oder ein CAN FD-Controller. Die Kommunikationssteuereinrichtung 21 erstellt und liest zweite Nachrichten 46, beispielsweise Classical CAN Nachrichten oder CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. Im letzteren Fall ist die Kommunikationssteuereinrichtung 21 wie ein herkömmlicher CAN FD-Controller ausgeführt.

Die Sende-/Empfangseinrichtungen 12, 32 können bis auf die nachfolgend noch genauer beschriebenen Unterschiede als CAN XL-Transceiver ausgeführt sein. Die Sende-/Empfangseinrichtungen 12, 32 sind zusätzlich oder alternativ wie ein herkömmlicher CAN FD Transceiver ausführbar. Die Sende-/Empfangseinrichtung 22 kann wie ein herkömmlicher CAN Transceiver oder CAN FD Transceiver ausgeführt sein.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Sende-/Empfangseinrichtung 12 oder der Sende-/Empfangseinrichtung 32 gesendet wird. Der CAN XL-Rahmen 450 ist für die CAN-Kommunikation auf dem Bus 40 in unterschiedliche Kommunikationsphasen 451 bis 455 unterteilt, nämlich eine Arbitrationsphase 451, eine erste Umschaltphase 452, die am Ende der Arbitrationsphase 451 liegt, eine Datenphase 453, eine zweite Umschaltphase 454, die am Ende der Datenphase 453 liegt, und eine Rahmenendphase 455.

In der Arbitrationsphase 451 wird beispielsweise am Anfang ein Bit gesendet, das auch SOF-Bit genannt wird und den Beginn des Rahmens bzw. Start of Frame anzeigt. In der Arbitrationsphase 451 wird außerdem ein Identifizierer mit beispielsweise 11 Bit zur Identifikation des Senders der Nachricht 45 gesendet. Bei der Arbitration wird mit Hilfe des Identifizierers bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der Umschaltphase 452 und der anschließenden Datenphase 453 einen exklusiven Zugriff auf den Bus 40 des Bussystems 1 bekommt.

In der ersten Umschaltphase 452 wird bei dem vorliegenden Ausführungsbeispiel die Umschaltung von der Arbitrationsphase 451 in die Datenphase 453 vorbereitet. Die Umschaltphase 452 kann ein Bit AL1 haben, das die Bitdauer T_B1 eines Bits der Arbitrationsphase 451 hat und mit dem Physical Layer der Arbitrationsphase 451 gesendet wird. Der Physical Layer entspricht der Bitübertragungsschicht oder Schicht 1 des bekannten OSI-Modells (Open Systems Interconnection Modell).

In der Datenphase 453 kann nach einem DH1-Bit und einem DL1-Bit zunächst ein beispielsweise 8 Bit langer Datenfeld-Identifizierer gesendet werden, der den Typ des Inhaltes im Datenfeld identifiziert. Z.B. kann der Datenfeld-Identifizierer den Wert 9 enthalten welches zum Beispiel aussagt, dass sich im Datenfeld ein Datenpaket befindet, das gemäß dem Internet Protokoll Version 4 (IPv4) aufgebaut ist. Im Anschluss an den Datenfeld-Identifizierer kann zum Beispiel ein 11 Bit langer Datenlängencode (Data-Length-Code) gesendet werden, der dann zum Beispiel Werte von 1 bis zu 2048 oder einen sonstigen Wert mit der Schrittweite von 1 annehmen kann. Der Datenlängencode kann alternativ weniger oder mehr Bit umfassen, so dass der Wertebereich und die Schrittweite andere Werte annehmen können. Anschließend folgen weitere Felder wie zum Beispiel das Kopf-Prüfsummenfeld. Danach werden die Nutzdaten des CAN XL-Rahmens 450 bzw. der Nachricht 45 gesendet, was auch als Datenfeld der Nachricht 45 bezeichnet werden kann. Die Nutzdaten können entsprechend dem Wertebereich des Datenlängencodes Daten aufweisen, beispielsweise mit einer Anzahl von bis zu 2048 Bytes oder einer größeren Anzahl von Bytes oder eine sonstige beliebige Anzahl von Daten. Am Ende der Datenphase 453 kann beispielsweise in einem Prüfsummenfeld eine Prüfsumme über die Daten der Datenphase 453 sowie der Daten der Arbitrationsphase 451 enthalten sein. Der Sender der Nachricht 45 kann Stuffbits nach jeweils einer vorbestimmten Anzahl von gleichen Bits, insbesondere 10 gleichen Bits, als inverses Bit in den Datenstrom einfügen. Insbesondere ist die Prüfsumme eine Rahmenprüfsumme F_CRC, mit welcher alle Bits des Rahmens 450 bis zum Prüfsummenfeld abgesichert werden. Danach kann ein FCP-Feld mit vorbestimmtem Wert, beispielsweise 1100, folgen.

In der zweiten Umschaltphase 454 wird bei dem vorliegenden Ausführungsbeispiel die Umschaltung von der Datenphase 453 in die Rahmenendphase 455 vorbereitet. Dabei wird eine in mindestens einem Bit enthaltene Protokollformatinformation gesendet, welche geeignet ist, die Umschaltung zu realisieren. Die Umschaltphase 454 kann ein Bit AH1 haben, das die Bitdauer T_B1 eines Bits der Arbitrationsphase 451 hat, jedoch mit dem Physical Layer der Datenphase 453 gesendet wird.

In der Rahmenendphase 455 kann nach zwei Bits AL2, AH2 in einem Endefeld in der Rahmenendphase 455 mindestens ein Acknowledge-Bit ACK enthalten sein. Danach kann eine Folge von 7 gleichen Bits folgen, welche das Ende des CAN XL-Rahmens 450 anzeigen. Mit dem mindestens einen Acknowledge-Bit ACK kann mitgeteilt werden, ob ein Empfänger in dem empfangenen CAN XL-Rahmen 450 bzw. der Nachricht 45 einen Fehler entdeckt hat oder nicht.

Mindestens in der Arbitrationsphase 451 und der Rahmenendphase 455 wird ein Physical Layer wie bei CAN und CAN-FD verwendet. Zusätzlich kann in der ersten Umschaltphase 452 zumindest teilweise, also am Anfang, ein Physical Layer wie bei CAN und CAN-FD verwendet werden. Zusätzlich kann in der zweiten Umschaltphase 454 zumindest teilweise, also am Ende, ein Physical Layer wie bei CAN und CAN-FD verwendet werden.

Ein wichtiger Punkt während der Phasen 451, 455, am Anfang der Phase 452 und am Ende der Phase 454 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können.

Die Arbitration am Anfang eines Rahmens 450 bzw. der Nachricht 45, 46 und das Acknowledgement in der Rahmenendphase 455 des Rahmens 450 bzw. der Nachricht 45, 46 ist nur dann möglich, wenn die Bitzeit deutlich mehr als doppelt so lang ist wie die Signal-Laufzeit zwischen zwei beliebigen Teilnehmerstationen 10, 20, 30 des Bussystems 1. Daher wird die Bitrate in der Arbitrationsphase 451, der Rahmenendphase 455 und zumindest teilweise in den Umschaltphasen 452, 454 langsamer gewählt als in der Datenphase 453 des Rahmens 450. Insbesondere wird die Bitrate in den Phasen 451, 452, 454, 455 als 500 kbit/s gewählt, woraus eine Bitzeit von ca. 2µs folgt, wohingegen die Bitrate in der Datenphase 453 als 5 bis 10 Mbit/s oder mehr gewählt wird, woraus eine Bitzeit von ca. 0,1µs und kürzer folgt. Somit ist die Bitzeit des Signals in den anderen Kommunikationsphasen 451, 452, 454, 455 um mindestens den Faktor 10 größer als die Bitzeit des Signals in der Datenphase 453.

Ein Sender der Nachricht 45, beispielsweise die Teilnehmerstation 10, beginnt ein Senden von Bits der Umschaltphase 452 und der anschließenden Datenphase 453 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat. Der Sender kann entweder nach einem Teil der Umschaltphase 452 auf die schnellere Bitrate und/oder den anderen Physical Layer wechseln oder erst mit dem ersten Bit, also mit dem Beginn, der anschließenden Datenphase 453 auf die schnellere Bitrate und/oder den anderen Physical Layer wechseln.

Ganz allgemein können in dem Bussystem mit CAN XL im Vergleich zu CAN oder CAN FD insbesondere folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate auf etwa 10 Megabit pro Sekunde, und
c) Anheben der Größe der Nutzdaten pro Rahmen auf max. 2kbyte oder auf einen beliebigen anderen Wert.

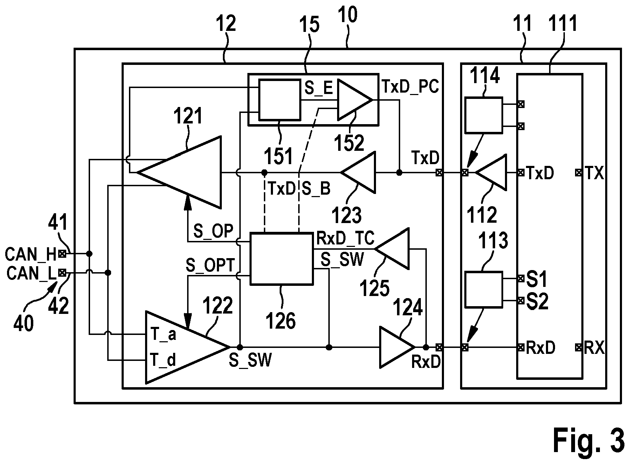

Fig. 3 zeigt den grundlegenden Aufbau der Teilnehmerstation 10 mit der Kommunikationssteuereinrichtung 11, der Sende-/Empfangseinrichtung 12 und dem Umschaltung-Rückmeldeblock 15. Die Teilnehmerstation 30 ist in ähnlicher Weise aufgebaut, wie in Fig. 3 gezeigt, außer dass der Block 35 separat von der Kommunikationssteuereinrichtung 31 und der Sende-/Empfangseinrichtung 32 vorgesehen ist. Daher werden die Teilnehmerstation 30 und der Block 35 nicht separat beschrieben. Die nachfolgend beschriebenen Funktionen des Umschaltung-Rückmeldeblocks 15 sind bei dem Umschaltung-Rückmeldeblock 35 identisch vorhanden.

Gemäß Fig. 3 hat die Kommunikationssteuereinrichtung 11 zudem ein Kommunikationssteuermodul 111, einen Sendesignal-Ausgangstreiber 112, ein RxD-Anschluss-Konfigurationsmodul 113 und ein TxD-Anschluss-Konfigurationsmodul 114. Die Kommunikationssteuereinrichtung 11 ist als Mikrocontroller ausgestaltet oder weist einen Mikrocontroller auf. Die Kommunikationssteuereinrichtung 11 verarbeitet Signale einer beliebigen Anwendung, beispielsweise eines Steuergeräts für einen Motor, eines Sicherheitssystems für eine Maschine oder ein Fahrzeug, oder sonstige Anwendungen. Das Kommunikationssteuermodul 111 ist ein Protokollkontroller, der die Signale TxD und RxD jeweils gemäß einem vorbestimmten Kommunikationsprotokoll, wie hier CAN FD oder CAN XL erstellt und/oder auswertet.

Nicht gezeigt in Fig. 3 ist jedoch eine System-ASIC (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC können unter anderem die Sende-/Empfangseinrichtung 12 und eine nicht dargestellte Energieversorgungseinrichtung eingebaut sein, welche die Sende-/Empfangseinrichtung 12 mit elektrischer Energie versorgt. Die Energieversorgungseinrichtung liefert üblicherweise eine Spannung CAN_Supply von 5 V. Je nach Bedarf kann die Energieversorgungseinrichtung jedoch eine andere Spannung mit einem anderen Wert liefern und/oder als Stromquelle ausgestaltet sein.

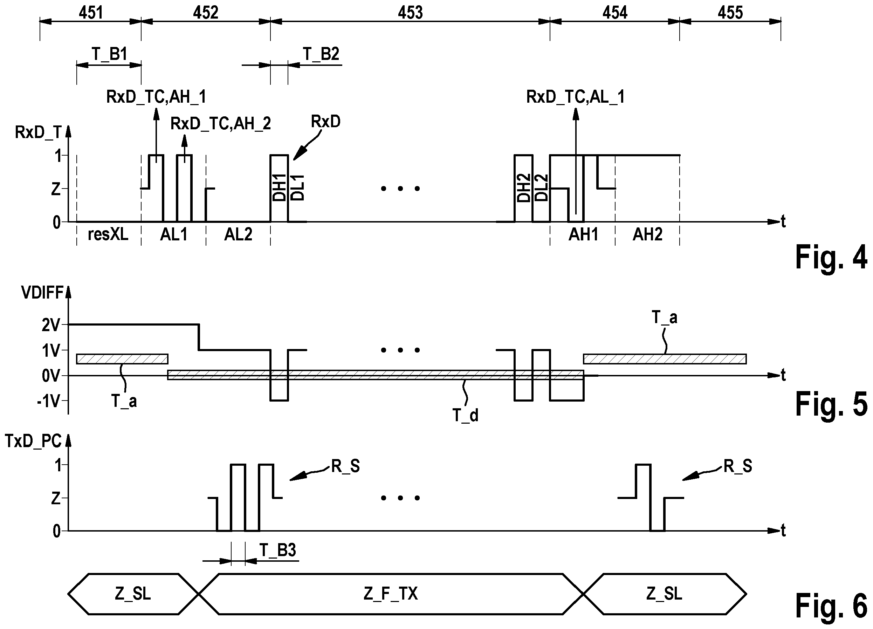

Gemäß Fig. 3 hat die Sende-/Empfangseinrichtung 12 zudem ein Sendemodul 121, ein Empfangsmodul 122, einen Treiber 123 für das Sendesignal TxD, einen Empfangssignal-Ausgangstreiber 124, einen Treiber 125, der ein Signal RxD_TC an den Umschaltblock 126 ausgibt, und einen Umschaltblock 126. Der Umschaltblock 126 bildet aus dem Signal RxD_TC und einem Signal S_SW, welches das Ausgangssignal des Empfangsmoduls 122 ist, ein Betriebszustand-Schaltsignal S_OP zum Schalten des Sendemoduls 121. Zusätzlich bildet der Umschaltblock 126 aus dem Signal RxD_TC und dem Signal S_SW ein Betriebszustand-Schaltsignal S_OPT zum Schalten von Empfangsschwellen des Empfangsmoduls 122. Der Umschaltblock 126 erkennt, dass eine Signalisierung von dem Kommunikationssteuermodul 111 vorliegt, indem der Umschaltblock 126 das Signal RxD_TC und das Signal S_SW vergleicht, denn das Signal RxD_TC enthält mindestens einen Puls AH_1, AH_2, der von dem Kommunikationssteuermodul 111 gesendet wird. Dies ist in Bezug auf Fig. 4 bis Fig. 9 nachfolgend genauer beschrieben

Die Verwendung des Signals TxD im Umschaltblock 126 ist optional, wie auch in Fig. 3 durch die gestrichelte Linie am Signal TxD gezeigt. Das Signal RxD und das Signal RxD_TC sind vom Signalverlauf gleich, wobei die beiden Signale durch einen Treiber 125 getrennt sind.

Das Sendemodul 121 wird auch als Transmitter bezeichnet. Das Empfangsmodul 122 wird auch als Receiver bezeichnet.

Der Umschaltblock 126 kann als Schaltblock ausgestaltet sein, der insbesondere mindestens ein Flipflop aufweist.

Der Umschaltung-Rückmeldeblock 15 hat ein Betriebsart-Erfassungsmodul 151 und ein Betriebsart-Rückmeldemodul 152, deren Funktionen nachfolgend genauer beschrieben sind.

Auch wenn nachfolgend immer von der Sende-/Empfangseinrichtung 12 gesprochen wird, ist es alternativ möglich, das Empfangsmodul 122 in einer separaten Einrichtung extern von dem Sendemodul 121 vorzusehen. Das Sendemodul 121 und das Empfangsmodul 122 können wie bei einer herkömmlichen Sende-/Empfangseinrichtung 22 aufgebaut sein. Das Sendemodul 121 kann insbesondere mindestens einen Operationsverstärker und/oder einen Transistor aufweisen. Das Empfangsmodul 122 kann insbesondere mindestens einen Operationsverstärker und/oder einen Transistor aufweisen.

Wie in Fig. 3 gezeigt, ist die Sende-/Empfangseinrichtung 12 an den Bus 40 angeschlossen, genauer gesagt dessen erste Busader 41 für CAN_H und dessen zweite Busader 42 für CAN_L. Die erste und zweite Busader 41, 42 sind in der Sende-/Empfangseinrichtung 12 mit dem Sendemodul 121 und mit dem Empfangsmodul 122 verbunden. Die Spannungsversorgung für die Energieversorgungseinrichtung zum Versorgen der ersten und zweiten Busader 41, 42 mit elektrischer Energie erfolgt wie üblich. Außerdem ist die Verbindung mit Masse bzw. CAN_GND wie üblich realisiert. Ähnliches gilt für die Terminierung der ersten und zweiten Busader 41, 42 mit einem Abschlusswiderstand.

Im Betrieb des Bussystems 1 setzt das Sendemodul 121, wenn die Teilnehmerstation 10 als Sender agiert, ein Sendesignal TxD der Kommunikationssteuereinrichtung 11 in entsprechende Signale CAN_H und CAN_L für die Busadern 41, 42 um und sendet diese Signale CAN_H und CAN_L auf den Bus 40. Auch wenn hier für die Sende-/Empfangseinrichtung 12 die Signale CAN_H und CAN_L genannt sind, so sind diese in Bezug auf die Nachricht 45 als Signale CAN-XL_H und CAN-XL_L zu verstehen, die in der Datenphase 453 von den herkömmlichen Signalen CAN_H und CAN_L in mindestens einem Merkmal abweichen, insbesondere in Bezug auf die Bildung der Buszustände für die verschiedenen Datenzustände des Signals TxD und/oder in Bezug auf die Spannung bzw. den Physical Layer und/oder die Bitrate.

In Folge der Signale auf dem Bus 40 bildet sich ein Differenzsignal VDIFF = CAN_H - CAN_L aus. Mit Ausnahme eines Leerlauf- oder Bereitschaftszustands (Idle oder Standby), hört die Sende-/Empfangseinrichtung 12 mit dem Empfangsmodul 122 im Normalbetrieb immer auf eine Übertragung von Daten bzw. Nachrichten 45, 46 auf dem Bus 40 und zwar unabhängig davon, ob die Teilnehmerstation 10 Sender der Nachricht 45 ist oder nicht. Das Empfangsmodul 122 bildet dabei ein Signal S_SW und gibt dieses über den Empfangssignal-Ausgangstreiber 124 als digitales Empfangssignal RxD an die Kommunikationssteuereinrichtung 11 weiter, wie in Fig. 3 gezeigt.

Am Ende der Arbitrationsphase 451 ist klar, welche der Teilnehmerstationen 10, 30 in der nachfolgenden Datenphase 453 als Sender und welche nur als Empfänger agiert. Bei dem vorliegenden Beispiel agiert die Teilnehmerstation 10 als Sender und auch als Empfänger, die Teilnehmerstation 30 nur als Empfänger. Selbstverständlich kann jedoch alternativ die Teilnehmerstation 30 der Sender sein.

Der Umschaltblock 126 ist ausgestaltet, in einer empfangenen Nachricht 45 vom Bus 40, den Beginn der jeweiligen Umschaltphasen 452, 454 zu erkennen und dann, je nach Funktion der Teilnehmerstation 10 in der nachfolgenden Kommunikationsphase, die Eigenschaften der Sende-/Empfangseinrichtung 12 umzuschalten. Dabei kann der Umschaltblock 126 zwischen den folgenden Betriebsarten der Sende-/Empfangseinrichtung 12 umschalten:
a) erste Betriebsart: Z_SL = Sende-/Empfangseigenschaften für die Arbitrationsphase 451,
   - Sendemodul 121 in der Sende-/Empfangseinrichtung 12 erzeugt dominante und rezessive Zustände auf dem Bus 40,
   - Empfangsmodul 122 arbeitet mit einer Empfangsschwelle T_a von üblicherweise etwa 0,7 V. Zusätzlich kann das Empfangsmodul 122, insbesondere für eine Integration der Teilnehmerstation 10 in eine laufende Kommunikation am Bus 40, mit einer negativen Empfangsschwelle arbeiten.
c) zweite Betriebsart: Sende-/Empfangseigenschaften für die Datenphase 453 als Empfänger (Empfangsknoten),
   - Sendemodul 121 in der Sende-/Empfangseinrichtung 12 erzeugt rezessive Zustände oder wird optional nach der Umschaltphase 452 ausgeschaltet, da die Sende-/Empfangseinrichtung 12 kein Sender ist, sondern nur als Empfänger der Nachricht 45 bzw. eines Rahmens 450 agiert,
   - Empfangsmodul 122 arbeitet mit einer Empfangsschwelle T_d von üblicherweise etwa 0,0 V.
c) dritte Betriebsart: Sende-/Empfangseigenschaften für die Datenphase 453 als Sender (Sendeknoten),
   - Sendemodul 121 in der Sende-/Empfangseinrichtung 12 treibt einen 0-Zustand oder einen 1-Zustand abhängig von dem TxD-Signal, da die Sende-/Empfangseinrichtung 12 als Sender der Nachricht 45 bzw. eines Rahmens 450 agiert,
   - Empfangsmodul 122 arbeitet mit einer Empfangsschwelle T_d von üblicherweise etwa 0,0 V.

Das RxD-Anschluss-Konfigurationsmodul 113 der Kommunikationssteuereinrichtung 11 konfiguriert den Anschluss RxD je nach der erforderlichen Kommunikationsrichtung unter Verwendung von Signalen S1, S2 an dem Eingang des Moduls 113, wie nachfolgend beschrieben. Das Signal S1 kann als RxD_out_ena bezeichnet werden, welches kein Treiben des zusätzlichen Signals RxD_TC über den RxD-Anschluss (erste Anschluss-Betriebsart) oder ein Treiben des zusätzlichen Signals RxD_TC über den RxD-Anschluss (zweite Anschluss-Betriebsart) ermöglicht. Das Signal S2 kann als RxD_out_val bezeichnet werden. Je nach Wert des Signals S2 treibt die Kommunikationssteuereinrichtung 11 den Anschluss RxD an den Umschaltzeitpunkten zwischen den zwei verschiedenen Kommunikationsphasen zur Signalisierung der einzustellenden Betriebsart an die Sende-/Empfangseinrichtung 12, also zum einen in der ersten Umschaltphase 452 zur Umschaltung zwischen Arbitrationsphase 451 und Datenphase 453 und zum anderen in der zweiten Umschaltphase 454 zur Umschaltung zwischen Datenphase 453 und Rahmenendphase 455. Optional kann die Kommunikationssteuereinrichtung 11, je nach Wert des Signals S2, den Anschluss RxD in einer dritten Anschluss-Betriebsart treiben, die auch "Talk-Mode" genannt werden kann, in welcher eine interne Kommunikation zwischen den Einrichtungen 11, 12 möglich ist. Ansonsten ist der Anschluss RxD, wie insbesondere bei CAN üblich, für die Kommunikationssteuereinrichtung 11 ein Eingang (Input), also kein Ausgang, wie zuvor beschrieben, so dass die Kommunikationssteuereinrichtung 11 den Anschluss RxD nicht treibt. Der Anschluss RxD kann somit mit Hilfe des RxD-Anschluss-Konfigurationsmoduls 113 und der Signale S1, S2 bidirektional betrieben werden. In anderen Worten, der Anschluss RxD ist ein bidirektionaler Anschluss.

Hierfür sind die Kommunikationssteuereinrichtung 11 und der Ausgangstreiber 124 derart ausgestaltet, dass die Kommunikationssteuereinrichtung 11 den Anschluss RxD beim Treiben zum Zweck der Signalisierung der einzuschaltenden Betriebsart stärker treibt als der Ausgangstreiber 124. Dadurch ist vermieden, dass der Wert der RxD-Leitung unbestimmt sein könnte, wenn sowohl die Kommunikationssteuereinrichtung 11 als auch der Ausgangstreiber 124 den Anschluss RxD treibt und es zu einer Überlagerung der beiden Signal-Quellen an dem Anschluss RxD kommt. Bei einer solchen Überlagerung der beiden Signal-Quellen an dem Anschluss RxD setzt sich somit immer die Kommunikationssteuereinrichtung 11 durch. Dadurch ist der Wert der RxD-Leitung immer bestimmt.

Das TxD-Anschluss-Konfigurationsmodul 114 der Kommunikationssteuereinrichtung 11 konfiguriert den Anschluss TxD je nach der erforderlichen Kommunikationsrichtung unter Verwendung von Signalen S3, S4 an dem Eingang des Moduls 114, wie nachfolgend beschrieben. Das Signal S3 kann als TxD_out_ena bezeichnet werden, welches kein Treiben des zusätzlichen Signals TxD_PC über den TxD-Anschluss (erste Anschluss-Betriebsart) oder ein Treiben des zusätzlichen Signals TxD_PC über den TxD-Anschluss (zweite Anschluss-Betriebsart) ermöglicht. Das Signal S4 kann als TxD_out_val bezeichnet werden. Je nach Wert des Signals S4 treibt die Kommunikationssteuereinrichtung 11 den Anschluss TxD an den Umschaltzeitpunkten zwischen den zwei verschiedenen Kommunikationsphasen nicht, um eine Rückmeldung R_S von der Sende-/Empfangseinrichtung 12, genauer gesagt deren Block 15 zu empfangen. Die Rückmeldung R_S signalisiert der Kommunikationssteuereinrichtung 11, ob die Sende-/Empfangseinrichtung 12 in den jeweiligen Umschaltphasen 452, 454 in die richtige Betriebsart geschaltet wurde.

Hierbei sind die Kommunikationssteuereinrichtung 11 und das Modul 152 derart ausgestaltet, dass die Sende/Empfangseinrichtung 12 den Anschluss TxD beim Treiben zum Zweck der Rückmeldung R_S der eingeschalteten Betriebsart stärker treibt als der Treiber 112. Dadurch ist der Wert der TxD-Leitung immer bestimmt, wie zuvor auch für die RxD-Leitung beschrieben.

Insbesondere kann der von der Sende-/Empfangseinrichtung 12 an die Kommunikationssteuereinrichtung 11 gesendete mindestens eine Puls an dem TxD-Anschluss bzw. auf der TxD-Leitung zur Rückmeldung der Betriebsart der Sende-/Empfangseinrichtung 12 zu Beginn stark getrieben werden. Anschließend kann die Sende-/Empfangseinrichtung 12 bis zum Ende der Rückmeldung, insbesondere innerhalb einer Bitzeit des Sendesignals TxD, für die Rückmeldung in einen schwächer getriebenen Betrieb übergehen, so dass der von der Kommunikationssteuereinrichtung 11 getriebene Pegel überfahren werden kann.

Somit wird in der Sende-/Empfangseinrichtung 12 und/oder der Kommunikationssteuereinrichtung 11 eine zeitlich abhängige Treiberleistung verwendet.

Damit kann der Umschaltblock 126 die Möglichkeit bereitstellen, eine der zuvor genannten mindestens drei Betriebsarten in der Sende-/Empfangseinrichtung 12 einzustellen, die über den RxD-Anschluss signalisiert werden. Zudem kann die Rückmeldung R_S der Umschaltung über die TxD-Leitung erfolgen. Ein zusätzlicher Anschluss in Form eines anderen Pins an der Sende-/Empfangseinrichtung 12 und damit auch an der Kommunikationssteuereinrichtung 11 ist für diese beiden Signalisierungen nicht erforderlich.

Der Umschaltblock 126 ist hierfür gemäß Fig. 3 mit mindestens zwei Eingängen versehen, über die in den Umschaltblock 126 ein Signal RxD_TC, das Signal S_SW und optional das Signal TxD eingespeist werden. Das Signal RxD_TC basiert auf einem Signal, das von der Kommunikationssteuereinrichtung 11 über den Anschluss für das RxD-Signal an die Sende-/Empfangseinrichtung 12 gesendet wird. Mit dem Signal RxD_TC signalisiert die Kommunikationssteuereinrichtung 11 der Sende-/Empfangseinrichtung 12 zumindest, dass die Sende-/Empfangseinrichtung 12 nun die Umschaltung in die entsprechende Betriebsart für die Datenphase 453 vorzunehmen hat. Zudem signalisiert die Kommunikationssteuereinrichtung 11 der Sende-/Empfangseinrichtung 12 mit dem Signal RxD_TC und/oder dem Signal TxD, in welche der Betriebsarten Z_F_RX, Z_F_TX die Umschaltung vorzunehmen ist. Dies ist insbesondere bei der Umschaltung von der Arbitrationsphase 451 zu der Datenphase 453 hilfreich. Am Ende der Datenphase 453 kann die Kommunikationssteuereinrichtung 11 mit dem Signal RxD_TC die Signalisierung für die Umschaltung der Sende-/Empfangseinrichtung 12 von jeder der beiden Betriebsarten der Datenphase 453 in die Betriebsart Z_SL für die Arbitrationsphase 451 vornehmen. Außerdem können mit dem Signal RxD_TC beliebige andere Informationen von der Kommunikationssteuereinrichtung 11 an die Sende-/Empfangseinrichtung 12 gesendet werden, wie zuvor erwähnt.

Gemäß Fig. 3 führt die Sende-/Empfangseinrichtung 12 das Signal RxD_TC von dem Anschluss RxD über den Treiber 125 zum Anschluss des Umschaltblocks 126 für das Signal RxD_TC. Das Signal S_SW wird dagegen aus dem vom Bus 40 empfangenen Signal generiert. Das Signal RxD_TC wird zwischen dem Anschluss für das RxD-Signal und dem Ausgang des Empfangssignaltreibers 124 zu dem Umschaltblock 126 geleitet. Das Signal S_SW wird von dem Ausgang des Empfangsmoduls 122 und vor dem Eingang des Empfangssignaltreibers 124 zu dem Umschaltblock 126 geleitet.

Erkennt der Umschaltblock 126 die Umschaltphase 452, wird mit den aus dem Umschaltblock 126 ausgegebenen Signalen S_OP, S_OPT der Betriebszustand des Sendemoduls 121 und/oder des Empfangsmoduls 122 und damit die Betriebsart der Sende-/Empfangseinrichtung 12 geschaltet.

Bei dem Umschaltung-Rückmeldeblock 15 erfasst das Betriebsart-Erfassungsmodul 151 aus den Ausgangssignalen des Sendemoduls 121 und des Empfangsmoduls 122, in welche Betriebsart Z_SL, Z_F_RX, Z_F_ZX das Sendemodul 121 und das Empfangsmodul 122 geschaltet sind. Insbesondere ist das Betriebsart-Erfassungsmodul 151 als Komparator ausgestaltet. Das Betriebsart-Erfassungsmodul 151 gibt das Erfassungsergebnis als ein Statussignal S_E an das Betriebsart-Rückmeldemodul 152 weiter. Mit Hilfe des Statussignals S_E entscheidet das Betriebsart-Rückmeldemodul 152, ob das Betriebsart-Rückmeldemodul 152 via TxD-Signal eine Rückmeldung R_S an die Kommunikationssteuereinrichtung 11 geben muss, und wie, also in welcher Form und wann, die Rückmeldung R_S gesendet werden muss.

Optional kann das Betriebsart-Rückmeldemodul 152 zusätzlich ein Statussignal S_B des Betriebsart-Umschaltblocks 126 verwenden, der zum Ausführen der Umschaltung der Betriebsart Z_SL, Z_F_RX, Z_F_ZX, aufgrund des Betriebsart-Umschaltsignals RxD_TC ausgestaltet ist. Das Statussignal S_B gibt an, ob eine Signalisierung der Umschaltbedingung erkannt wurde. Optional gibt das Statussignal S_B zusätzlich an, in welche Betriebsart geschaltet werden soll.

Falls die Rückmeldung R_S positiv ausfällt, das heißt die Sende-/Empfangseinrichtung 12 hat die Signalisierung erkannt und hat die Betriebsart wie gefordert umgeschaltet, dann sendet das Betriebsart-Rückmeldemodul 152 an dem TxD-Anschluss ein Signal TxD_PC für die Kommunikationssteuereinrichtung 11, um über den TxD-Anschluss die Rückmeldung R_S für die Kommunikationssteuereinrichtung 11 zu geben.

Die Sende-/Empfangseinrichtungen 12, 32 haben verschiedene Möglichkeiten, die Rückmeldung via TxD-Signal durchzuführen. Dies ist in Bezug auf Fig. 4 bis Fig. 9 nachfolgend für ein Beispiel genauer beschrieben. Dabei wird angenommen, dass die Teilnehmerstation 10 als Sender (Sendeknoten) für die Datenphase 453 agiert und die Teilnehmerstation 30 nur als Empfänger (Empfangsknoten) für die Datenphase 453 agiert.

Fig. 4 bis Fig. 6 zeigen ein Beispiel für Signale vor während und nach der Umschaltphase 452 und anschließend vor während und nach der Umschaltphase 454 bei der Teilnehmerstation 10 (Sendeknoten). Am Übergang von der Arbitrationsphase 451 zu der Datenphase 453 wird in der Umschaltphase 452 von einer Bitdauer T_B1 der Arbitrationsphase 451 zu einer kleineren bzw. kürzeren Bitdauer T_B2 der Datenphase 453 und auf einen anderen Physical Layer umgeschaltet. Dabei wird die Betriebsart Z_SL der Sende-/Empfangseinrichtung 12 in die Betriebsart Z_F_TX der Sende-/Empfangseinrichtung 12 umgeschaltet.

Nach der Datenphase 453, die in Fig. 4 bis Fig. 6 nur am Anfang und am Ende genauer gezeigt ist, wird am Übergang von der Datenphase 453 zu der Rahmenendphase 455 in der Umschaltphase 454 von der Bitdauer T_B2 der Datenphase 453 zurück zu der Bitdauer T_B1 umgeschaltet. Dabei wird die Betriebsart Z_F_TX der Sende-/Empfangseinrichtung 12 in die Betriebsart Z_SL der Sende-/Empfangseinrichtung 12 umgeschaltet.

Fig. 4 zeigt hierfür ein Beispiel für ein RxD_T-Signal, das von der Sende-/Empfangseinrichtung 12 zu der Kommunikationssteuereinrichtung 11 getrieben wird. Das Signal RxD_T setzt sich zusammen aus dem digitalen Signal RxD, das aus dem Signal S_SW erzeugt wurde, und dem Signal RxD_TC, welches die Kommunikationssteuereinrichtung 11 über den zweiten Anschluss RxD an die Sende-/Empfangseinrichtung 12 treibt. Das Signal RxD_TC für die Umschaltung der Betriebsart der Sende-/Empfangseinrichtung 12 hat mindestens einen inversen Puls AH_2 zu dem Wert des Bits AL1. Gemäß dem Beispiel von Fig. 4 treibt die Kommunikationssteuereinrichtung 11 an die Sende-/Empfangseinrichtung 12 als Signal RxD_TC an dem zweiten Anschluss RxD in der Umschaltphase 452 nacheinander die Zustände Z, 1,0, 1, 0, Z. Der Zustand Z steht für den hochohmigen Zustand. Dagegen treibt die Kommunikationssteuereinrichtung 11 als Signal RxD_TC in der Umschaltphase 454 nacheinander die Zustände Z, 1, 0, Z. Das Signal RxD_T umfasst also auch die Signalisierung mittels des Signals RxD_TC , wobei das Signal RxD_TC das Signal RxD_T überschreibt.

Mit anderen Worten, im Protokollablauf sendet bzw. treibt die Sende-/Empfangseinrichtung 12 am Anschluss RxD bzw. der RxD-Leitung in dem Signal RxD_T in der Umschaltphase 452 ein Bit AL1 = 0, also einen 0-Zustand oder Low-Zustand, an die Kommunikationssteuereinrichtung 11. Jedoch treibt die Kommunikationssteuereinrichtung 11 auf der RxD-Leitung in dem Bit AL1 das Pulsmuster AH_2 unter anderem mit 1-Zuständen oder High-Zuständen.

Dagegen sendet bzw. treibt die Sende-/Empfangseinrichtung 12 am Anschluss RxD bzw. der RxD-Leitung in dem Signal RxD_T in der Umschaltphase 454 ein Bit AH1 = 1, also einen 1-Zustand oder High-Zustand, an die Kommunikationssteuereinrichtung 11. Jedoch treibt die Kommunikationssteuereinrichtung 11 auf der RxD-Leitung in dem Bit AH1 das Pulsmuster AL_1 unter anderem mit einem 0-Zustand oder Low-Zustand.

Fig. 5 zeigt einen Teil des Differenzspannungssignals VDIFF, das sich auf dem Bus 40 aufgrund des Sendesignals TxD_T von der Teilnehmerstation 10 einstellt, und das von der Sende-/Empfangseinrichtung 12 als Signal S_SW von dem Bus 40 empfangen wurde. Die Signalzustände des Sendesignals TxD_T von der Teilnehmerstation 10 sind im Normalbetrieb ohne Fehler gleich dem digitalen Signal RxD, das aus dem Signal S_SW erzeugt wurde.

Fig. 6 zeigt ein Signal TxD_PC, das von der Sende-/Empfangseinrichtung 12 über den ersten Anschluss TxD zu der Kommunikationssteuereinrichtung 11 getrieben wird, um die Rückmeldung R_S über die Umschaltung der Betriebsart zu geben.

Wie in Fig. 4 bis Fig. 6 gezeigt, sendet die Kommunikationssteuereinrichtung 11 gemäß dem Signal RxD_T vor der Umschaltphase 452 in dem Sendesignal TxD_T ein resXL-Bit, und in der Umschaltphase 452 nacheinander ein AL1-Bit und ein AL2-Bit jeweils mit einem Zustand 0 oder Low Low (erster binärer Signalzustand).

Danach wird am Ende der Arbitrationsphase 451 aufgrund des Signals RxD_TC von Fig. 4, von den Bits der Arbitrationsphase 451 mit der Bitzeit T_B1 auf die kürzeren Bits der Datenphase 453 mit der Bitzeit T_B2 umgeschaltet, wie in Fig. 4 bis Fig. 6 gezeigt. Hierfür hat das Signal RxD_TC mindestens einen Puls oder, wie bei dem Beispiel von Fig. 4 gezeigt, ein Pulsmuster AH_1 mit mindestens zwei Bits in dem AL1-Bit. Die Zeitdauer T_B3 eines Pulses des Pulsmusters AH_1 von Fig. 4 ist in etwa gleich, insbesondere gleich, oder kürzer als die Bitzeit T_B2. Die Zeitdauer T_B3 eines Pulses des Pulsmusters AH_1 von Fig. 4 ist kürzer als die Bitzeit T_B1. Nach dem AL2-Bit folgen die Daten der Datenphase 453. Dabei wird zunächst ein Datenbit DH1 mit einem Zustand 1 oder High (zweiter binärer Signalzustand) und anschließend ein Datenbit DL1 mit einem Zustand 0 oder Low (erster binärer Signalzustand) gesendet.

Wie aus der Zusammenschau von Fig. 4 und Fig. 5 ersichtlich, wird in der Umschaltphase 452 nach dem ersten Puls des Pulsmusters AH_2 in dem Empfangsmodul 122 die Empfangsschwelle T_a auf die Empfangsschwelle T_d umgeschaltet. Nach dem zweiten Puls des Pulsmusters AH_2, wird in dem Sendemodul 121 der Physical Layer umgeschaltet. Dadurch ist die Betriebsart Z_SL der Sende-/Empfangseinrichtung 12 in die Betriebsart Z_F_TX der Sende-/Empfangseinrichtung 12 umgeschaltet, wie in Zusammenschau mit Fig. 6 ersichtlich.

Gemäß Fig. 6 findet die Rückmeldung R_S mit dem Modul 152 in dem AL2-Bit statt. Somit findet die Rückmeldung R_S statt, nachdem die RXD-Signalisierung mit mindestens einem Puls oder dem Pulsmuster AH_2 des Signals RxD_TC in dem AL1-Bit sowie die tatsächliche Umschaltung der Betriebsart der Sende-/Empfangseinrichtung 12 stattgefunden hat. Die Sende-/Empfangseinrichtung 12 sendet also bei dem Beispiel von Fig. 6 als Rückmeldung R_S in der Umschaltphase 452 über den ersten Anschluss TxD ein inverses Pulsmuster mit den Zuständen Z, 0, 1, 0, 1, Z, das bis zu dem DH1-Bit, und somit bis zu dem folgenden Flankenwechsel am Bus 40 dauert.

Tastet die Kommunikationssteuereinrichtung 11, genauer deren Modul 111, das AL2-Bit in dem Sendesignal TxD ab und sieht dabei in der Umschaltphase 452 die Zustände Z, 0, 1, 0, 1, Z oder zumindest eine logische ,1' bzw. einmal den Zustand ,High', dann wurde die Umschaltung in der Sende-/Empfangseinrichtung 12 in der Umschaltphase 452 korrekt durchgeführt. Sieht die Kommunikationssteuereinrichtung 11, genauer deren Modul 111, eine logische ,0' bzw. den Zustand ,Low', dann wurde die Umschaltung in der Sende-/Empfangseinrichtung 12 in der Umschaltphase 452 nicht korrekt durchgeführt.

Für die Umschaltung in der Umschaltphase 454 signalisiert die Kommunikationssteuereinrichtung 11 der Sende-/Empfangseinrichtung 12 über den zweiten Anschluss RxD in einem AH1-Bit (Zustand 1 oder High (zweiter binärer Signalzustand)) die vorzunehmende Umschaltung mit dem RxD-TC-Signal. Dies ist als ein Beispiel auf der rechten Seite von Fig. 4 gezeigt. Das Signal RxD_TC für die Umschaltung der Betriebsart der Sende-/Empfangseinrichtung 12 in der Umschaltphase 454 hat mindestens einen inversen Puls zu dem Wert des Bits AH1.

Gemäß Fig. 4 hat das Signal RxD_TC in der Umschaltphase 454 die Zustände Z, 0, 1, Z oder mindestens einen Puls AL_1 oder ein Pulsmuster AL_1. Danach wird in dem Empfangsmodul 122 die Empfangsschwelle T_d auf die Empfangsschwelle T_a umgeschaltet. Zudem wird in dem Sendemodul 121 der Physical Layer umgeschaltet. Diese Umschaltung erfolgt entweder gleichzeitig mit dem Umschalten des Empfangsmoduls 122, wie in Fig. 6 gezeigt, oder mit dem Flankenwechsel am Ende des Bits AH2 (Zustand 1 oder High (zweiter binärer Signalzustand). Danach ist die Betriebsart Z_F_TX der Sende-/Empfangseinrichtung 12 in die Betriebsart Z_SL der Sende-/Empfangseinrichtung 12 umgeschaltet, wie in Zusammenschau mit Fig. 6 ersichtlich.

Hat zumindest eine der zuvor beschriebenen Umschaltungen der Betriebsart nicht funktioniert und ist die Rückmeldung R_S ausgeblieben, so liegt ein Fehlerfall vor. Beispielsweise ist die Sende-/Empfangseinrichtung 32 in der Betriebsart für die erste Kommunikationsphase (längere Bitdauern) verblieben, obwohl sie für die zweite Kommunikationsphase (kürzere Bitdauern) in die Betriebsart Z_F_RX hätte wechseln sollen. Mit hoher Wahrscheinlichkeit wird die Kommunikationssteuereinrichtung 31 jetzt in dem Bitstrom des Signals RxD über den zweiten Anschluss Bitfehler entdecken, weil die Empfangsschwelle in dem Empfangsmodul 122 nicht auf T_d umgeschaltet wurde. Wenn die Kommunikationssteuereinrichtung 31 in dem Bitstrom des Signals RxD über den zweiten Anschluss Bitfehler sieht, muss die Kommunikationssteuereinrichtung 31 bei der anschließenden Fehlerbehandlung die Sende-/Empfangseinrichtung 32 nicht in die Betriebsart Z_SL für die erste Kommunikationsphase (längere Bitdauern) schalten, denn die Sende-/Empfangseinrichtung 32 ist schon in dieser Betriebsart.

Hat die Umschaltung der Betriebsart in der Sende-/Empfangseinrichtung 32 funktioniert und wurde dies korrekt mit Hilfe des Signalverlaufs der Rückmeldung R_S signalisiert, so weiß die Kommunikationssteuereinrichtung 31, dass die Sende-/Empfangseinrichtung 32 in der Betriebsart Z_F_RX ist. Wenn die Kommunikationssteuereinrichtung 31 einen Bitfehler in dem Bitstrom des Signals RxD über den zweiten Anschluss entdeckt, muss die Kommunikationssteuereinrichtung 31 bei der anschließenden Fehlerbehandlung die Sende-/Empfangseinrichtung 12 bewusst von einer Betriebsart der zweiten Kommunikationsphase (längere Bitdauer) in eine Betriebsart der ersten Kommunikationsphase (kürzere Bitdauer) umschalten kann, insbesondere mit einem Puls auf dem TXD-Signal. Dadurch ist es nicht notwendig, die zeitlich langen Zeitablaufdauern (TimeOuts) in der Sende-/Empfangseinrichtung 12 abzuwarten, die die Betriebsart ebenfalls auf die Betriebsart der ersten Kommunikationsphase zurückschalten. Dies hat zur Folge, dass die Sende-/Empfangseinrichtung 12 (Empfangsknoten) trotz Empfangsfehler die Leerlauf-Bedingung ("Idle Bedingung") von 11 rezessiven Bits am Ende eines gesendeten Rahmens 450 erkennen kann und sich somit sehr schnell wieder in die Kommunikation auf dem Bus 40 integrieren kann.

Zusätzlich ist es optional möglich, dass die Teilnehmerstation 10 einen Fehlerrahmen sendet, um die Übertragung des Rahmens 450 bzw. der Nachricht 45 abzubrechen. Dadurch kann die Übertragung mit fehlerhaft eingestellten Buskomponenten schnellstmöglich abgebrochen werden. Dies steigert die im Bussystem 1 übertragbare Nettodatenrate. Dadurch wird die Kommunikation in dem Bussystem 1 robuster.

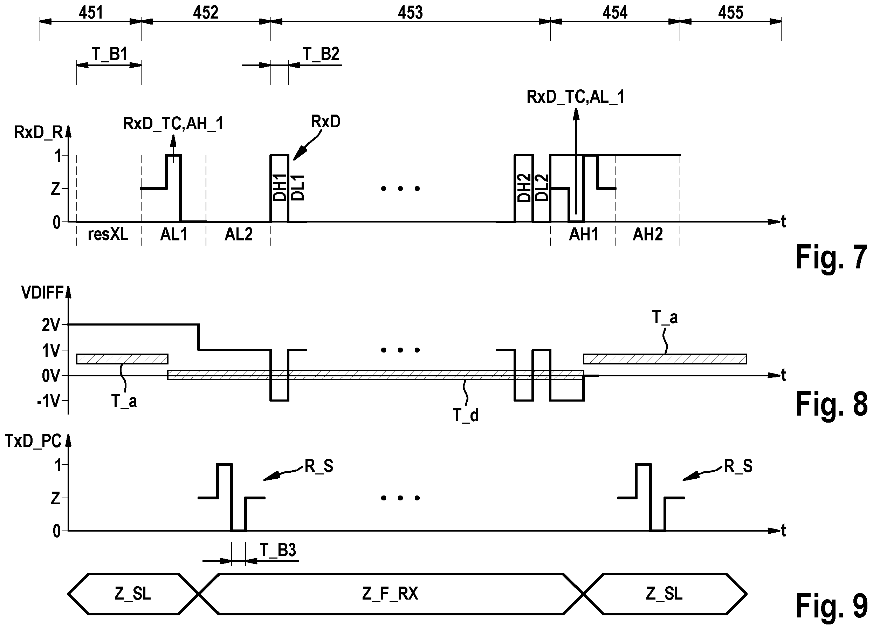

Fig. 7 bis Fig. 9 zeigen ein Beispiel für Signale vor während und nach der Umschaltphase 452 und anschließend vor während und nach der Umschaltphase 454 bei der Teilnehmerstation 30 (Empfangsknoten). Die Signale sind in vielen Bereichen ähnlich oder identisch zu den Signalen von Fig. 4 bis Fig. 6. Daher sind nachfolgend nur die Unterschiede zu den Signalen von Fig. 4 bis Fig. 6 beschrieben

Am Übergang von der Arbitrationsphase 451 zu der Datenphase 453 wird die Betriebsart Z_SL der Sende-/Empfangseinrichtung 32 in die Betriebsart Z_F_RX der Sende-/Empfangseinrichtung 12 umgeschaltet. Nach der Datenphase 453 wird die Betriebsart Z_F_RX der Sende-/Empfangseinrichtung 32 in die Betriebsart Z_SL der Sende-/Empfangseinrichtung 32 umgeschaltet.

Fig. 7 zeigt hierfür ein Beispiel für ein RxD_R-Signal, das von der Sende-/Empfangseinrichtung 32 zu der Kommunikationssteuereinrichtung 31 getrieben wird. Das Signal RxD_R setzt sich zusammen aus dem digitalen Signal RxD, das aus dem Signal S_SW erzeugt wurde, und dem Signal RxD_TC, welches die Kommunikationssteuereinrichtung 31 über den zweiten Anschluss RxD an die Sende-/Empfangseinrichtung 32 treibt. Das Signal RxD_TC für die Umschaltung der Betriebsart der Sende-/Empfangseinrichtung 32 hat mindestens einen inversen Puls zu dem Wert des Bit AL1. In Fig. 7 hat das Signal RxD_TC in der Umschaltphase 452 nacheinander die Zustände Z, 1,0. Das Signal RxD_R umfasst also auch die Signalisierung mittels des Signals RxD_TC, wobei das Signal RxD_TC das Signal RxD_R überschreibt.

Mit anderen Worten, im Protokollablauf sendet bzw. treibt die Sende-/Empfangseinrichtung 12 am Anschluss RxD bzw. der RxD-Leitung in dem Signal RxD_R in der Umschaltphase 452 das Bit AL1 = 0, also einen 0-Zustand oder Low-Zustand, an die Kommunikationssteuereinrichtung 11. Jedoch treibt die Kommunikationssteuereinrichtung 11 auf der RxD-Leitung in dem Bit AL1 das Pulsmuster AH_1 unter anderem mit einem 1-Zustand oder High-Zustand.

Dagegen sendet bzw. treibt die Sende-/Empfangseinrichtung 12 am Anschluss RxD bzw. der RxD-Leitung in dem Signal RxD_T in der Umschaltphase 454 das Bit AH1 = 1, also einen 1-Zustand oder High-Zustand, an die Kommunikationssteuereinrichtung 11. Jedoch treibt die Kommunikationssteuereinrichtung 11 auf der RxD-Leitung in dem Bit AH1 das Pulsmuster AL_1 unter anderem mit einem 0-Zustand oder Low-Zustand.

Fig. 8 zeigt einen Teil des Differenzspannungssignals VDIFF, das sich auf dem Bus 40 aufgrund des Sendesignals TxD_T von der Teilnehmerstation 10 einstellt und bei der Sende-/Empfangseinrichtung 32 als Signal S_SW empfangen wird. Das Signal von Fig. 8 ist somit identisch zu dem Signal von Fig. 5.

Fig. 9 zeigt das Signal TxD_PC, das von der Sende-/Empfangseinrichtung 32 über den ersten Anschluss TxD zu der Kommunikationssteuereinrichtung 31 getrieben wird, um die Rückmeldung R_S über die Umschaltung zu geben.

Wie in Fig. 7 bis Fig. 9 gezeigt, hat das Signal RxD_TC in der Umschaltphase 452 einen Puls AH_1, wie bei dem Beispiel von Fig. 7 gezeigt, oder ein Pulsmuster AH_1 mit mindestens zwei Bits in dem AL1-Bit.

Wie aus der Zusammenschau von Fig. 7 und Fig. 8 ersichtlich, wird nach dem Puls AH_1 in dem in dem Empfangsmodul, das dem Empfangsmodul 122 entspricht, die Empfangsschwelle T_a auf die Empfangsschwelle T_d umgeschaltet. Zudem kann beispielsweise das Sendemodul, das dem Sendemodul 121 entspricht, für die Datenphase 453 ausgeschaltet werden oder auf einen Zustand 1 oder High (zweiter binärer Signalzustand) geschaltet werden. Dadurch ist die Betriebsart Z_SL der Sende-/Empfangseinrichtung 32 in die Betriebsart Z_F_RX der Sende-/Empfangseinrichtung 32 umgeschaltet, wie in Zusammenschau mit Fig. 9 ersichtlich.

Gemäß Fig. 9 findet die Rückmeldung R_S mit dem Modul des Blocks 35, das dem Modul 152 entspricht, in dem AL2-Bit statt. Somit findet die Rückmeldung R_S statt, nachdem die RXD-Signalisierung mit mindestens einem Puls oder dem Pulsmuster AH_2 des Signals RxD_TC in dem AL1-Bit sowie die tatsächliche Umschaltung der Betriebsart der Sende-/Empfangseinrichtung 32 stattgefunden hat.

Die Sende-/Empfangseinrichtung 32 sendet bei dem Beispiel von Fig. 9 in der Umschaltphase 452 als Rückmeldung R_S in dem AL2-Bit über den ersten Anschluss TxD ein TxD_PC-Signal mit mindestens einem inversen Puls oder einem inversen Pulsmuster, das bis zu dem DH1-Bit, und somit bis zu dem folgenden Flankenwechsel am Bus 40 dauern kann. In Fig. 9 hat das Signal TxD_PC in der Umschaltphase 454 nacheinander die Zustände Z, 1,0, Z. Die Sende-/Empfangseinrichtung 32 sendet also bei dem Beispiel von Fig. 9 als Rückmeldung R_S in der Umschaltphase 452 über den ersten Anschluss TxD ein inverses Pulsmuster mit den Zuständen Z, 1, 0, Z, das bis zu dem DH1-Bit, und somit bis zu dem folgenden Flankenwechsel am Bus 40 dauert.

Tastet die Kommunikationssteuereinrichtung 31, genauer deren Modul, das dem Modul 111 entspricht, das AL2-Bit in dem Sendesignal TxD ab und sieht dabei die Zustände Z, 1, 0, Z oder zumindest eine logische ,1' bzw. einmal den Zustand ,High', dann wurde die Umschaltung in der Sende-/Empfangseinrichtung 32 korrekt durchgeführt. Sieht die Kommunikationssteuereinrichtung 31, genauer deren Modul 111, eine logische ,0' bzw. den Zustand ,Low', dann wurde die Umschaltung in der Sende-/Empfangseinrichtung 32 nicht korrekt durchgeführt.

Für die Umschaltung in der Umschaltphase 454 signalisiert die Kommunikationssteuereinrichtung 31der Sende-/Empfangseinrichtung 32 über den zweiten Anschluss RxD in einem AH1-Bit (Zustand 1 oder High (zweiter binärer Signalzustand)) die vorzunehmende Umschaltung mit dem RxD-TC-Signal. Dies ist als ein Beispiel auf der rechten Seite von Fig. 7 gezeigt. Das Signal RxD_TC für die Umschaltung der Betriebsart der Sende-/Empfangseinrichtung 32 in der Umschaltphase 454 hat mindestens einen inversen Puls zu dem Wert des Bits AH1.

Gemäß Fig. 7 hat das Signal RxD_TC in der Umschaltphase 454 die Zustände Z, 0, 1, Z oder mindestens einen Puls AL_1 oder ein Pulsmuster AL_1. Danach wird in dem Empfangsmodul, das dem Empfangsmodul 122 entspricht, die Empfangsschwelle T_d auf die Empfangsschwelle T_a umgeschaltet. Zudem wird in dem Sendemodul, das dem Sendemodul 121 entspricht, wieder eingeschaltet bzw. der Zustand konstant 1 oder High (zweiter binärer Signalzustand) ausgeschaltet, so dass das Sendemodul der Sende-/Empfangseinrichtung 32 wieder in dem Zustand für die erste Betriebsart Z_SL ist. Diese Umschaltung erfolgt entweder gleichzeitig mit dem Umschalten des Empfangsmoduls, das dem Empfangsmodul 122 entspricht, wie in Fig. 9 gezeigt, oder mit dem Flankenwechsel am Ende des Bits AH2 (Zustand 1 oder High (zweiter binärer Signalzustand). Danach ist die Betriebsart Z_F_RX der Sende-/Empfangseinrichtung 32 in die Betriebsart Z_SL der Sende-/Empfangseinrichtung 32 umgeschaltet, wie in Zusammenschau mit Fig. 9 ersichtlich.

Hat zumindest eine der zuvor beschriebenen Umschaltungen der Betriebsart nicht funktioniert, liegt ein Fehlerfall vor. Im Fehlerfall kann die Kommunikationssteuereinrichtung 31 reagieren, indem die Kommunikationssteuereinrichtung 31 für die Sende-/Empfangseinrichtung 32 vorgeht, wie zuvor für die Teilnehmerstation 10 in Bezug auf Fig. 4 bis Fig. 6 beschrieben.

Optional kann eine Rückmeldung R_S mit dem TxD_PC-Signal bereits vor der Umschaltung zumindest des Sendemoduls 121 gegeben werden. Somit kann die Rückmeldung R_S vor der tatsächlichen Umschaltung der Betriebsart der Sende-/Empfangseinrichtung 32 stattfinden

Die Rückmeldung R_S in dem AL2-Bit gemäß Fig. 6 oder Fig. 9 ist vorteilhafter als die Rückmeldung R_S vor der tatsächlichen Umschaltung der Betriebsart der Sende-/Empfangseinrichtung 32, da sonst in den Einrichtungen 12, 32 zusätzliche Flanken gesehen werden könnten, welche die Synchronisation der Teilnehmerstationen 10, 30 an stört bzw. aufhebt.

Durch die zuvor beschriebene Ausgestaltung der Teilnehmerstation 10 ist keine galvanische Verbindung durch jeweils einen zusätzlichen Anschluss an der Kommunikationssteuereinrichtung 11 und der damit verbundenen Sende-/Empfangseinrichtung 12 erforderlich, damit die Kommunikationssteuereinrichtung 11 den Zeitpunkt der Betriebsartumschaltung übertragen kann und die Rückmeldung R_S empfangen kann. Das heißt, der Block 15 benötigt vorteilhaft keinen zusätzlichen Anschluss, der an einem Standardgehäuse der Sende-/Empfangseinrichtung 12 nicht verfügbar ist. Somit ist durch den Block 15 kein Wechsel auf ein anderes größeres und kostenintensives Gehäuse notwendig, um einen zusätzlichen Anschluss bereitzustellen.

Außerdem ermöglicht der Block 15, dass die Sende-/Empfangseinrichtung 12 keine Protokollkontroller-Funktionalität benötigt. Ein solcher Protokollkontroller könnte unter anderem die Umschaltphase 452 der Nachricht 45 erkennen und abhängig davon die Datenphase 453 einleiten. Da ein solcher zusätzlicher Protokollkontroller jedoch beachtlich Fläche in der Sende-/Empfangseinrichtung 12 oder dem ASIC benötigen würde, bewirkt der Block 15 eine deutliche Senkung des Ressourcenbedarfs.

Dadurch bietet die Verschaltung des Betriebsart-Umschaltblocks 126 und des Block 15 mit einer üblichen Sende-/Empfangseinrichtung eine sehr unaufwändige und kostengünstige Lösung, um der Sende-/Empfangseinrichtung 12 nicht nur kenntlich zu machen, dass eine Umschaltung und welche Umschaltung zwischen ihren verschiedenen Betriebsarten vorzunehmen ist, nämlich insbesondere von der ersten Betriebsart in die zweite Betriebsart oder von der ersten Betriebsart in die dritte Betriebsart oder von der zweiten Betriebsart in die erste Betriebsart oder eine sonstige Umschaltung von Betriebsarten. Zusätzlich kann der Block 15 auch sehr unaufwändig und kostengünstig sowie robust der Kommunikationssteuereinrichtung 12 die entsprechende Rückmeldung R_S über die Umschaltung geben.

Durch die beschriebene Ausgestaltung der Sende-/Empfangseinrichtung(en) 12, 32 können in der Datenphase 452 weit höhere Datenraten als mit CAN oder CAN-FD erreicht werden. Zudem kann die Datenlänge in dem Datenfeld der Datenphase 453 beliebig gewählt werden, wie zuvor beschrieben. Dadurch können die Vorteile von CAN in Bezug auf die Arbitrierung beibehalten und dennoch eine größere Anzahl von Daten in kürzerer Zeit als bisher sehr sicher und damit effektiv übertragen werden, das heißt, ohne dass eine Wiederholung der Daten aufgrund eines Fehlers notwendig wäre, wie nachfolgend erläutert.

Ein weiterer Vorteil besteht darin, dass Fehlerrahmen in dem Bussystem 1 bei der Übertragung von Nachrichten 45 nicht benötigt werden, jedoch optional verwendet werden können. Werden keine Fehlerrahmen verwendet, werden Nachrichten 45 nicht mehr zerstört, was eine Ursache für die Notwendigkeit einer Doppelübertragung von Nachrichten beseitigt. Dadurch steigt die Nettodatenrate.

Ist das Bussystem kein CAN Bussystem, kann der Betriebsart-Umschaltblock 126 ausgelegt werden oder sein, auf andere Umschaltsignale zu reagieren. Entsprechendes gilt für den Block 15. In diesem Fall kann der Betriebsart-Umschaltblock 126 abhängig von einem Ergebnis seiner Auswertung das Sendemodul 121 und/oder das Empfangsmodul 122 in eine von mindestens zwei verschiedenen Betriebsarten schalten und mindestens eine der Betriebsarten nach Ablauf einer bei dem Betriebsart-Umschaltblock 126 voreingestellten Zeitdauer T0 in eine andere der Betriebsarten umschalten. Dabei kann der Block 15 jeweils der Kommunikationssteuereinrichtung 12 die entsprechende Rückmeldung R_S über die Umschaltung geben.

Gemäß einem zweiten Ausführungsbeispiel sendet der Block 15, genauer sein Modul 152, in der Umschaltphase 452 anstelle eines Pulsmusters ein Bit mit dem Zustand 1 oder High (zweiter binärer Signalzustand an dem TxD-Anschluss. Gilt beispielsweise derzeit RxD = 0, dann kann die jeweilige Sende-/Empfangseinrichtung 12, 32 das Bit ,1' an dem Anschluss RxD senden.

Ansonsten ist das Bussystem 1 bei dem zweiten Ausführungsbeispiel auf die gleiche Weise aufgebaut, wie zuvor in Bezug auf das erste Ausführungsbeispiel beschrieben.

Somit hat jede der Sende-/Empfangseinrichtungen 12, 32 verschiedene Möglichkeiten, die Rückmeldung R_S mit dem Sendesignal TxD, TxD_R, TxD_T durchzuführen. Anhand der daraus resultierenden Manipulation des Sendesignals TxD, TxD_R, TxD_T erkennt die Kommunikationssteuereinrichtung 11, 31, insbesondere ihr Modul 111, eine positive Rückmeldung R_S von der zugehörigen Sende-/Empfangseinrichtung 12, 32.

Vorteilhaft ist, wenn sich in den Umschaltphasen 452, 454 die RxD-Pulsmuster, die in den Umschaltphasen 452, 454 zur Signalisierung der Umschaltung verwendet werden, und die TxD-Pulsmuster, die in den Umschaltphasen 452, 454 zur Rückmeldung der Betriebsart der Sende-/Empfangseinrichtung 12, 32 verwendet werden, in Polarität und/oder Anzahl der Pulse unterscheiden. Dadurch kann die Störsicherheit gegen verschiedenste Fehlerfälle erhöht werden, beispielsweise bei Heraufschalten (Ramp-Up) und Herunterschalten (Ramp-Down) der Versorgungsspannungen der gesamten Teilnehmerstation 10, 30

Alle zuvor beschriebenen Ausgestaltungen der Blöcke 15, 35, der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 10BaseT1-S Ethernet, Feldbussystemen, usw. einsetzbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

Die Art der Signalisierung der Umschaltung der Betriebsart der einzelnen Sende-/Empfangseinrichtungen 12, 32 ist beliebig wählbar. Zusätzlich oder alternativ ist die Art der Rückmeldung R_S für jede einzelne Sende-/Empfangseinrichtung 12, 32 beliebig wählbar. Zudem kann sich die Rückmeldung R_S für die Umschaltung von der Arbitrationsphase 451 in die Datenphase 453 unterscheiden von der Rückmeldung R_S für die Umschaltung von der Datenphase 453 in die Arbitrationsphase 451, wie in Fig. 6 und Fig. 9 gezeigt. Hierbei sind beliebige Kombinationen der zuvor beschriebenen Ausführungsvarianten der Rückmeldung R_S denkbar.

## Patentansprüche

1. Sende-/Empfangseinrichtung (12; 32) für eine Teilnehmerstation (10; 30) eines seriellen Bussystems (1), mit
einem ersten Anschluss zum Empfang eines Sendesignals (TxD) von einer Kommunikationssteuereinrichtung (11; 31),
einem Sendemodul (121) zum Senden des Sendesignals (TxD) auf einen Bus (40) des Bussystems (1), bei welchem Bussystem (1) zum Austausch von Nachrichten (45; 46) zwischen Teilnehmerstationen (10, 20, 30) des Bussystems (1) mindestens eine erste Kommunikationsphase (451, 452, 454, 455) und eine zweite Kommunikationsphase (453) verwendet werden,
einem Empfangsmodul (122) zum Empfang des Signals (S_SW) von dem Bus (40), wobei das Empfangsmodul (122) ausgestaltet ist, aus dem von dem Bus (40) empfangenen Signal (S_SW) ein digitales Empfangssignal (RxD; RxD_T; RxD_R) zu erzeugen,
**gekennzeichnet durch**
einen zweiten Anschluss zum Senden des digitalen Empfangssignals (RxD; RxD_T; RxD_R) an die Kommunikationssteuereinrichtung (11; 31) und zum Empfang eines Betriebsart-Umschaltsignals (RxD_TC) von der Kommunikationssteuereinrichtung (11; 31), um, je nach Funktion der Teilnehmerstation (10; 30) in der nachfolgenden Kommunikationsphase (451, 452, 454, 455; 453), zwischen Betriebsarten der Sende-/Empfangseinrichtung (12; 32) umzuschalten, und
einen Umschaltung-Rückmeldeblock (15; 35) zur Erfassung aus den Ausgangssignalen des Sendemoduls (121) und des Empfangsmoduls (122), in welche Betriebsart (Z_SL; Z_F_RX; Z_F_ZX) das Sendemodul (121) und das Empfangsmodul (122) geschaltet sind, und zur Ausgabe einer Rückmeldung (R_S) über eine erfolgte Umschaltung der Betriebsart (Z_SL; Z_F_RX; Z_F_TX) aufgrund des Betriebsart-Umschaltsignals (RxD_TC),
wobei der Umschaltung-Rückmeldeblock (15; 35) mit dem ersten Anschluss verbunden ist, zur Ausgabe der Rückmeldung (R_S) über den ersten Anschluss an die Kommunikationssteuereinrichtung (11; 31).

2. Sende-/Empfangseinrichtung (12; 32) nach Anspruch 1, wobei der Umschaltung-Rückmeldeblock (15; 35) aufweist
ein Betriebsart-Erfassungsmodul (151) zur Erfassung aus den Ausgangssignalen des Sendemoduls (121) und des Empfangsmoduls (122), in welche Betriebsart (Z_SL; Z_F_RX; Z_F_ZX) das Sendemodul (121) und das Empfangsmodul (122) geschaltet sind, und
ein Betriebsart-Rückmeldemodul (152) zur Auswertung eines von dem Betriebsart-Erfassungsmodul (151) ausgegebenen Betriebsart-Statussignals (S_E),
wobei das Betriebsart-Rückmeldemodul (152) ausgestaltet ist, mit einem Ergebnis der Auswertung zu entscheiden, ob das Betriebsart-Rückmeldemodul (152) über das digitale Sendesignal (TxD) eine Rückmeldung (R_S) an die Kommunikationssteuereinrichtung (11) geben muss, und wann die Rückmeldung (R_S) gesendet werden muss.

3. Sende-/Empfangseinrichtung (12; 32) nach einem der vorangehenden Ansprüche,
wobei das Betriebsart-Rückmeldemodul (152) ausgestaltet ist, die Rückmeldung (R_S) in das digitale Sendesignal (TxD) nach der Umschaltung der Betriebsart (Z_SL; Z_F_RX; Z_F_ZX) einzufügen, die mit dem Betriebsart-Umschaltsignal (RxD_TC) signalisiert wurde, oder
wobei das Betriebsart-Rückmeldemodul (152) ausgestaltet ist, die Rückmeldung (R_S) in das digitale Sendesignal (TxD) nach dem Betriebsart-Umschaltsignal (RxD_TC), jedoch vor der Umschaltung der Betriebsart (Z_SL; Z_F_RX; Z_F_ZX) einzufügen, die mit dem Betriebsart-Umschaltsignal (RxD_TC) signalisiert wurde.

4. Sende-/Empfangseinrichtung (12; 32) nach Anspruch 3, wobei das Betriebsart-Rückmeldemodul (152) ausgestaltet ist, die Rückmeldung (R_S) am Anfang stärker zu treiben als am Ende der Rückmeldung (R_S).

5. Sende-/Empfangseinrichtung (12; 32) nach Anspruch 3 oder 4, wobei das Betriebsart-Rückmeldemodul (152) ausgestaltet ist, die Rückmeldung (R_S) in das digitale Sendesignal (TxD) als mindestens ein Puls (AH_1) mit einem Wert einzufügen, der invers zu einem Wert des digitalen Sendesignals (TxD) ist.

6. Sende-/Empfangseinrichtung (12; 32) nach Anspruch 5, wobei der mindestens eine Puls (AH_1) bis zu einem folgenden Flankenwechsel am Bus (40) dauert, der in dem digitalen Sendesignal (TxD) folgt.

7. Sende-/Empfangseinrichtung (12; 32) nach einem der vorangehenden Ansprüche,
zudem mit einem Betriebsart-Umschaltblock (126) der mit dem zweiten Anschluss verbunden ist, um das an dem zweiten Anschluss von der Kommunikationssteuereinrichtung (11; 31) empfangene Betriebsart-Umschaltsignal (RxD_TC) für eine Umschaltung der Betriebsart (Z_SL; Z_F_RX; Z_F_TX) auszuwerten,
wobei der Betriebsart-Umschaltblock (126) ausgestaltet ist, das Sendemodul (121) und/oder das Empfangsmodul (122) abhängig von einem Ergebnis der Auswertung in eine von mindestens drei verschiedenen Betriebsarten (Z_SL; Z_F_RX; Z_F_TX) zu schalten.

8. Sende-/Empfangseinrichtung (12; 32) nach einem der vorangehenden Ansprüche,
wobei das an dem zweiten Anschluss von der Kommunikationssteuereinrichtung (11; 31) empfangene Betriebsart-Umschaltsignal (RxD_TC) mindestens ein Puls (AH_1) mit einem Wert ist, der invers zu einem Wert des digitalen Empfangssignals (RxD; RxD_T; RxD_R) ist,
wobei der Betriebsart-Umschaltblock (126) ausgestaltet ist, das Empfangsmodul (122) von der ersten Betriebsart (Z_SL) in die zweite Betriebsart (Z_F_RX) zu schalten, wenn das Umschaltsignal (RxD_TC) einen Puls (AH_1) aufweist,
wobei der Betriebsart-Umschaltblock (126) ausgestaltet ist, das Sendemodul (121) und das Empfangsmodul (122) von der ersten Betriebsart (Z_SL) in die dritte Betriebsart (Z_F_TX) zu schalten, wenn das Umschaltsignal (RxD_TC) zwei Pulse (AH_1) aufweist,
wobei die Sende-/Empfangseinrichtung (12; 32) in der zweiten Betriebsart (Z_F_RX) nicht der Sender der Nachricht (45) in der zweiten Kommunikationsphase (453) ist, und
wobei die Sende-/Empfangseinrichtung (12; 32) in der dritten Betriebsart (Z_F_TX) Sender der Nachricht (45) in der zweiten Kommunikationsphase (453) ist.

9. Sende-/Empfangseinrichtung (12; 32) nach einem der vorangehenden Ansprüche, wobei die Sende-/Empfangseinrichtung (12; 32) ausgestaltet ist, als Rückmeldung (R_S) über den ersten Anschluss mindestens einen Puls zu senden, der sich von dem mindestens einen Puls des Betriebsart-Umschaltsignals (RxD_TC) an dem zweiten Anschluss in Polarität und oder Anzahl der Pulse unterscheidet.

10. Sende-/Empfangseinrichtung (12; 32) nach einem der vorangehenden Ansprüche,
wobei das Sendemodul (121) ausgestaltet ist, in der ersten Kommunikationsphase (451) Bits der Signale auf den Bus (40) mit einer ersten Bitzeit (T_B1) zu treiben, die um mindestens den Faktor 10 größer als eine zweite Bitzeit (T_B2) von Bits ist, die das Sendemodul (121) in der zweiten Kommunikationsphase (453) auf den Bus (40) treibt, und
wobei das Betriebsart-Umschaltsignal (RxD_TC) über den zweiten Anschluss zur Signalisierung, dass die Umschaltung der Betriebsart vorzunehmen ist, mindestens einen Puls mit einer Zeitdauer (T_B3) hat, die kleiner als die erste Bitzeit (T_B1) ist und größer als die zweite Bitzeit (T_B2) ist, oder mindestens einen Puls mit einer Pulszeitdauer (T_B3) hat, die in etwa gleich der zweiten Bitzeit (T_B2) ist oder kleiner als die zweite Bitzeit (T_B2) ist, und
wobei die Rückmeldung (R_S) über den ersten Anschluss zur Signalisierung, dass die Betriebsart umgeschaltet wurde, mindestens einen Puls mit einer Zeitdauer (T_B3) hat, die kleiner als die erste Bitzeit (T_B1) ist, und größer als die zweite Bitzeit (T_B2) ist, oder mindestens einen Puls mit einer Pulszeitdauer (T_B3) hat, die in etwa gleich der zweiten Bitzeit (T_B2) ist oder kleiner als die zweite Bitzeit (T_B2) ist.

11. Sende-/Empfangseinrichtung (12; 32) nach einem der vorangehenden Ansprüche, wobei das in der ersten Kommunikationsphase (451, 452, 454, 455) von dem Bus (40) empfangene Signal (S_SW) mit einem anderen Physical Layer erzeugt ist als das in der zweiten Kommunikationsphase (453) von dem Bus (40) empfangene Signal (S_SW).

12. Sende-/Empfangseinrichtung (12; 32) nach einem der vorangehenden Ansprüche, wobei in der ersten Kommunikationsphase (451, 452, 454, 455) ausgehandelt wird, welche der Teilnehmerstationen (10, 20, 30) des Bussystems (1) in der nachfolgenden zweiten Kommunikationsphase (453) einen zumindest zeitweise exklusiven, kollisionsfreien Zugriff auf den Bus (40) bekommt.

13. Kommunikationssteuereinrichtung (11; 31) für eine Teilnehmerstation (10; 30) eines seriellen Bussystems (1), mit
einem Kommunikationssteuermodul (111) zum Erzeugen eines Sendesignals (TxD) zum Steuern einer Kommunikation der Teilnehmerstation (10; 30) mit mindestens einer anderen Teilnehmerstation (10; 20; 30) des Bussystems (1), bei welchem Bussystem (1) zum Austausch von Nachrichten (45; 46) zwischen Teilnehmerstationen (10, 20, 30) des Bussystems (1) mindestens eine erste Kommunikationsphase (451, 452, 454) und eine zweite Kommunikationsphase (453) verwendet werden,
einem ersten Anschluss zum Senden des Sendesignals (TxD) an eine Sende-/Empfangseinrichtung (12; 32), die zum Senden des Sendesignals (TxD) auf einen Bus (40) des Bussystems (1) ausgestaltet ist, und deren Betriebsart, je nach Funktion der Teilnehmerstation (10; 30) in der nachfolgenden Kommunikationsphase (451, 452, 454, 455; 453), umschaltbar ist,
einem zweiten Anschluss zum Empfangen eines digitalen Empfangssignals (RxD; RxD_T; RxD_R) von der Sende-/Empfangseinrichtung (12; 32),
wobei die Kommunikationssteuereinrichtung (11; 31) zum Erzeugen eines zusätzlichen Signals (RxD_TC) ausgestaltet ist, welches der Sende-/Empfangseinrichtung (12; 32) anzeigt, dass von ihrer derzeitigen Betriebsart in eine andere Betriebsart von mindestens drei verschiedenen Betriebsarten zu schalten ist, und welches eine interne Kommunikation zwischen dem Kommunikationssteuermodul (111) und der Sende-/Empfangseinrichtung (12; 32) realisiert,
**dadurch gekennzeichnet,**
**dass** das Kommunikationssteuermodul (111) ausgestaltet ist, das zusätzliche Signal (RxD_TC) über den zweiten Anschluss in dem digitalen Empfangssignal (RxD; RxD_T; RxD_R) an die Sende-/Empfangseinrichtung (12; 32) zu senden, und
**dass** das Kommunikationssteuermodul (111) ausgestaltet ist, über den ersten Anschluss in dem Sendesignal (TxD) von der Sende-/Empfangseinrichtung (12; 32) eine Rückmeldung (R_S) über eine erfolgte Umschaltung der Betriebsart (Z_SL; Z_F_RX; Z_F_TX) aufgrund des Betriebsart-Umschaltsignals (RxD_TC) zu empfangen und die Rückmeldung (R_S) auszuwerten.

14. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Sende-/Empfangseinrichtung (12; 32) nach einem der Ansprüche 1 bis 12 sowie eine Kommunikationssteuereinrichtung (11; 31) nach Anspruch 13 aufweist.

15. Verfahren zur Kommunikation in einem seriellen Bussystem (1), wobei das Verfahren mit einer Sende-/Empfangseinrichtung für eine Teilnehmerstation (10; 30) eines Bussystems (1) ausgeführt wird, bei welchem zum Austausch von Nachrichten (45; 46) zwischen Teilnehmerstationen (10, 20, 30) des Bussystems (1) mindestens eine erste Kommunikationsphase (451, 452, 454, 455) und eine zweite Kommunikationsphase (453) verwendet werden, wobei die Teilnehmerstation (10; 30) ein Sendemodul (121), ein Empfangsmodul (122), einen Betriebsart-Umschaltblock (126), einen Umschaltung-Rückmeldeblock (15; 35), einen ersten Anschluss und einen zweiten Anschluss aufweist, und wobei das Verfahren die Schritte aufweist,
Empfangen, mit dem Empfangsmodul (122), eines Signals (S_SW) von dem Bus (40) des Bussystems (1),
Erzeugen, mit dem Empfangsmodul (122), aus dem von dem Bus (40) empfangenen Signal (S_SW) eines digitalen Empfangssignals (RxD; RxD_T; RxD_R) und Ausgeben des digitalen Empfangssignals (RxD; RxD_T; RxD_R) an dem zweiten Anschluss,
**gekennzeichnet durch** die Schritte
Empfangen, mit dem Betriebsart-Umschaltblock (126), der mit dem zweiten Anschluss verbunden ist, des Betriebsart-Umschaltsignals (RxD_TC) an dem zweiten Anschluss von der Kommunikationssteuereinrichtung (11; 31), um das empfangene Betriebsart-Umschaltsignal (RxD_TC) für eine Umschaltung der Betriebsart (Z_SL; Z_F_RX; Z_F_TX) auszuwerten,
Erfassen, mit dem Umschaltung-Rückmeldeblock (15; 35), aus den Ausgangssignalen des Sendemoduls (121) und des Empfangsmoduls (122), in welche Betriebsart (Z_SL; Z_F_RX; Z_F_ZX) das Sendemodul (121) und das Empfangsmodul (122) geschaltet sind, und
Ausgeben, mit dem Umschaltung-Rückmeldeblock (15; 35), der mit dem ersten Anschluss verbunden ist, einer Rückmeldung (R_S) über eine erfolgte Umschaltung der Betriebsart (Z_SL; Z_F_RX; Z_F_TX) aufgrund des Betriebsart-Umschaltsignals (RxD_TC) über den ersten Anschluss an die Kommunikationssteuereinrichtung (11; 31).

## Claims

1. Transmitting/receiving device (12; 32) for a subscriber station (10; 30) of a serial bus system (1), having
a first connection for receiving a transmission signal (TxD) from a communication control device (11; 31),
a transmitting module (121) for transmitting the transmission signal (TxD) onto a bus (40) of the bus system (1), in which bus system (1) at least a first communication phase (451, 452, 454, 455) and a second communication phase (453) are used to exchange messages (45; 46) between subscriber stations (10, 20, 30) of the bus system (1),
a receiving module (122) for receiving the signal (S_SW) from the bus (40), wherein the receiving module (122) is configured to generate a digital reception signal (RxD; RxD_T; RxD_R) from the signal (S_SW) received from the bus (40),
**characterized by**
a second connection for transmitting the digital reception signal (RxD; RxD_T; RxD_R) to the communication control device (11; 31) and for receiving an operating mode switch-over signal (RxD_TC) from the communication control device (11; 31) in order to switch over between operating modes of the transmitting/receiving device (12; 32) depending on the function of the subscriber station (10; 30) in the subsequent communication phase (451, 452, 454, 455; 453), and
a switch-over feedback block (15; 35) for detecting, from the output signals of the transmitting module (121) and of the receiving module (122), into which operating mode (Z_SL; Z_F_RX; Z_F_ZX) the transmitting module (121) and the receiving module (122) are switched, and for outputting feedback (R_S) about a performed switch-over of the operating mode (Z_SL; Z_F_RX; Z_F_TX) due to the operating mode switch-over signal (RxD_TC),
wherein the switch-over feedback block (15; 35) is connected to the first connection for outputting the feedback (R_S) to the communication control device (11; 31) via the first connection.

2. Transmitting/receiving device (12; 32) according to Claim 1, wherein the switch-over feedback block (15; 35) has
an operating mode detection module (151) for detecting, from the output signals of the transmitting module (121) and of the receiving module (122), into which operating mode (Z_SL; Z_F_RX; Z_F_ZX) the transmitting module (121) and the receiving module (122) are switched, and
an operating mode feedback module (152) for evaluating an operating mode status signal (S_E) that is output by the operating mode detection module (151),
wherein the operating mode feedback module (152) is configured to decide, using a result of the evaluation, whether the operating mode feedback module (152) has to give feedback (R_S) to the communication control device (11) via the digital transmission signal (TxD) and when the feedback (R_S) has to be transmitted.

3. Transmitting/receiving device (12; 32) according to either of the preceding claims,
wherein the operating mode feedback module (152) is configured to insert the feedback (R_S) into the digital transmission signal (TxD) after the switch-over of the operating mode (Z_SL; Z_F_RX; Z_F_ZX) which was signalled by the operating mode switch-over signal (RxD_TC), or
wherein the operating mode feedback module (152) is configured to insert the feedback (R_S) into the digital transmission signal (TxD) after the operating mode switch-over signal (RxD_TC) but before the switch-over of the operating mode (Z_SL; Z_F_RX; Z_F_ZX) which was signalled by the operating mode switch-over signal (RxD_TC).

4. Transmitting/receiving device (12; 32) according to Claim 3, wherein the operating mode feedback module (152) is configured to drive the feedback (R_S) more strongly at the beginning than at the end of the feedback (R_S).

5. Transmitting/receiving device (12; 32) according to Claim 3 or 4, wherein the operating mode feedback module (152) is configured to insert the feedback (R_S) into the digital transmission signal (TxD) as at least one pulse (AH_1) having a value which is inverse to a value of the digital transmission signal (TxD).

6. Transmitting/receiving device (12; 32) according to Claim 5, wherein the at least one pulse (AH_1) lasts up until a subsequent edge change on the bus (40), which follows in the digital transmission signal (TxD).

7. Transmitting/receiving device (12; 32) according to one of the preceding claims,
additionally having an operating mode switch-over block (126) which is connected to the second connection in order to evaluate the operating mode switch-over signal (RxD_TC) received from the communication control device (11; 31) at the second connection for a switch-over of the operating mode (Z_SL; Z_F_RX; Z_F_TX),
wherein the operating mode switch-over block (126) is configured to switch the transmitting module (121) and/or the receiving module (122) into one of at least three different operating modes (Z_SL; Z_F_RX; Z_F_TX) depending on a result of the evaluation.

8. Transmitting/receiving device (12; 32) according to one of the preceding claims,
wherein the operating mode switch-over signal (RxD_TC) received from the communication control device (11; 31) at the second connection is at least one pulse (AH_1) having a value which is inverse to a value of the digital reception signal (RxD; RxD_T; RxD_R),
wherein the operating mode switch-over block (126) is configured to switch the receiving module (122) from the first operating mode (Z_SL) to the second operating mode (Z_F_RX) if the switch-over signal (RxD_TC) has a pulse (AH_1),
wherein the operating mode switch-over block (126) is configured to switch the transmitting module (121) and the receiving module (122) from the first operating mode (Z_SL) to the third operating mode (Z_F_TX) if the switch-over signal (RxD_TC) has two pulses (AH_1),
wherein the transmitting/receiving device (12; 32) in the second operating mode (Z_F_RX) is not the transmitter of the message (45) in the second communication phase (453), and
wherein the transmitting/receiving device (12; 32) in the third operating mode (Z_F_TX) is the transmitter of the message (45) in the second communication phase (453).

9. Transmitting/receiving device (12; 32) according to one of the preceding claims, wherein the transmitting/receiving device (12; 32) is configured to transmit, as feedback (R_S) via the first connection, at least one pulse which differs from the at least one pulse of the operating mode switch-over signal (RxD_TC) at the second connection in polarity and/or number of the pulses.

10. Transmitting/receiving device (12; 32) according to one of the preceding claims,
wherein the transmitting module (121) is configured to drive bits of the signals onto the bus (40) in the first communication phase (451) with a first bit time (T_B1) which is greater by at least the factor 10 than a second bit time (T_B2) of bits which drives the transmitting module (121) onto the bus (40) in the second communication phase (453), and
wherein the operating mode switch-over signal (RxD_TC) via the second connection for signalling that the switch-over of the operating mode is to be carried out has at least one pulse with a duration (T_B3) which is less than the first bit time (T_B1) and is greater than the second bit time (T_B2), or has at least one pulse with a pulse duration (T_B3) which is approximately equal to the second bit time (T_B2) or is less than the second bit time (T_B2), and
wherein the feedback (R_S) via the first connection for signalling that the operating mode has been switched over has at least one pulse with a duration (T_B3) which is less than the first bit time (T_B1), and is greater than the second bit time (T_B2), or has at least one pulse with a pulse duration (T_B3) which is approximately equal to the second bit time (T_B2) or is less than the second bit time (T_B2).

11. Transmitting/receiving device (12; 32) according to one of the preceding claims, wherein the signal (S_SW) received from the bus (40) in the first communication phase (451, 452, 454, 455) is generated with a different physical layer than the signal (S_SW) received from the bus (40) in the second communication phase (453).

12. Transmitting/receiving device (12; 32) according to one of the preceding claims, wherein the first communication phase (451, 452, 454, 455) involves negotiating which of the subscriber stations (10, 20, 30) of the bus system (1) receives at least temporarily exclusive, collision-free access to the bus (40) in the subsequent, second communication phase (453).

13. Communication control device (11; 31) for a subscriber station (10; 30) of a serial bus system (1), having
a communication control module (111) for generating a transmission signal (TxD) for controlling communication between the subscriber station (10; 30) and at least one other subscriber station (10; 20; 30) of the bus system (1), in which bus system (1) at least a first communication phase (451, 452, 454) and a second communication phase (453) are used to exchange messages (45; 46) between subscriber stations (10, 20, 30) of the bus system (1),
a first connection for transmitting the transmission signal (TxD) to a transmitting/receiving device (12; 32) which is configured to transmit the transmission signal (TxD) onto a bus (40) of the bus system (1), and the operating mode of which is able to be switched over depending on the function of the subscriber station (10; 30) in the subsequent communication phase (451, 452, 454, 455; 453),
a second connection for receiving a digital reception signal (RxD; RxD_T; RxD_R) from the transmitting/receiving device (12; 32),
wherein the communication control device (11; 31) is configured to generate an additional signal (RxD_TC) which indicates that the transmit-ting/receiving device (12; 32) is to be switched from its current operating mode into a different operating mode of at least three different operating modes, and which realizes internal communication between the communication control module (111) and the transmitting/receiving device (12; 32),
**characterized**
**in that** the communication control module (111) is configured to transmit the additional signal (RxD_TC) to the transmitting/receiving device (12; 32) via the second connection in the digital reception signal (RxD; RxD_T; RxD_R), and
**in that** the communication control module (111) is configured to receive feedback (R_S) about a performed switch-over of the operating mode (Z_SL; Z_F_RX; Z_F_TX) due to the operating mode switch-over signal (RxD_TC) via the first connection in the transmission signal (TxD) from the transmitting/receiving device (12; 32) and to evaluate the feedback (R_S).

14. Bus system (1) having
a bus (40), and
at least two subscriber stations (10; 20; 30) which are connected to one another via the bus (40) in such a way that they can communicate serially with one another and at least one subscriber station (10; 30) of which has a transmitting/receiving device (12; 32) according to one of Claims 1 to 12 and a communication control device (11; 31) according to Claim 13.

15. Method for communication in a serial bus system (1), wherein the method is carried out using a transmitting/receiving device for a subscriber station (10; 30) of a bus system (1) in which at least a first communication phase (451, 452, 454, 455) and a second communication phase (453) are used to exchange messages (45; 46) between subscriber stations (10, 20, 30) of the bus system (1), wherein the subscriber station (10; 30) has a transmitting module (121), a receiving module (122), an operating mode switch-over block (126), a switch-over feedback block (15; 35), a first connection and a second connection, and wherein the method has the steps of:
receiving, by means of the receiving module (122), a signal (S_SW) from the bus (40) of the bus system (1),
generating, by means of the receiving module (122), from the signal (S_SW) received from the bus (40), a digital reception signal (RxD; RxD_T; RxD_R) and outputting the digital reception signal (RxD; RxD_T; RxD_R) at the second connection,
**characterized by** the steps of:
receiving, by means of the operating mode switch-over block (126) which is connected to the second connection, the operating mode switch-over signal (RxD_TC) at the second connection from the communication control device (11; 31) in order to evaluate the received operating mode switch-over signal (RxD_TC) for a switch-over of the operating mode (Z_SL; Z_F_RX; Z_F_TX),
detecting, by means of the switch-over feedback block (15; 35), from the output signals of the transmitting module (121) and of the receiving module (122), into which operating mode (Z_SL; Z_F_RX; Z_F_ZX) the transmitting module (121) and the receiving module (122) are switched, and
outputting, by means of the switch-over feedback block (15; 35) which is connected to the first connection, feedback (R_S) about a performed switch-over of the operating mode (Z_SL; Z_F_RX; Z_F_TX) due to the operating mode switch-over signal (RxD_TC) via the first connection to the communication control device (11; 31).

## Revendications

1. Dispositif d'émission/réception (12 ; 32) pour une station d'abonné (10 ; 30) d'un système de bus série (1), comprenant
une première borne pour recevoir un signal d'émission (TxD) d'un dispositif d'émission/réception (11 ; 31),
un module d'émission (121) pour émettre un signal d'émission (TxD) sur un bus (40) du système de bus (1), dans lequel système de bus (1) au moins une première phase de communication (451, 452, 454, 455) et une deuxième phase de communication (453) sont utilisées pour échanger des messages (45 ; 46) entre des stations d'abonné (10, 20, 30) du système de bus (1),
un module de réception (122) pour recevoir le signal (S_SW) du bus (40), le module de réception (122) étant configuré pour produire un signal de réception numérique (RxD ; RxD_T ; RxD_R) à partir du signal (S_SW) reçu du bus (40),
**caractérisé par**
une deuxième borne pour émettre le signal de réception numérique (RxD ; RxD_T ; RxD_R) au dispositif de commande de communication (11 ; 31) et pour recevoir un signal de commutation de mode de fonctionnement (RxD_TC) du dispositif de commande de communication (11 ; 31) afin de commuter, selon la fonction de la station d'abonné (10 ; 30) dans la phase de communication (451, 452, 454, 455 ; 453) suivante, entre des modes de fonctionnement du dispositif d'émission/réception (12 ; 32), et
un bloc de retour de commutation (15 ; 35) pour détecter à partir des signaux de sortie du module d'émission (121) et du module de réception (122) sur quel mode de fonctionnement (Z_SL ; Z_F_RX ; Z_F_ZX) sont commutés le module d'émission (121) et le module de réception (122), et pour sortir un retour (R_S) concernant une commutation effectuée du mode de fonctionnement (Z_SL ; Z_F_RX ; Z_F_ZX) en raison du signal de commutation de mode de fonctionnement (RxD_TC),
dans lequel le bloc de retour de commutation (15 ; 35) est relié à la première borne pour sortir le retour (R_S) par l'intermédiaire de la première borne au dispositif de commande de communication (11 ; 31).

2. Dispositif d'émission/réception (12 ; 32) selon la revendication 1, dans lequel le bloc de retour de commutation (15 ; 35) présente
un module de détection de mode de fonctionnement (151) pour détecter à partir des signaux de sortie du module d'émission (121) et du module de réception (122) dans quel mode de fonctionnement (Z_SL ; Z_F_RX ; Z_F_ZX) sont commutés le module d'émission (121) et le module de réception (122), et
un module de retour de mode de fonctionnement (152) pour évaluer un signal d'état de mode de fonctionnement (S_E) sorti par le module de détection de mode de fonctionnement (151),
dans lequel le module de retour de mode de fonctionnement (152) est configuré pour décider à l'aide d'un résultat de l'évaluation si le module de retour de mode de fonctionnement (152) doit fournir par l'intermédiaire du signal d'émission numérique (TxD) un retour (R_S) au dispositif de commande de communication (11) et quand le retour (R_S) est à émettre.

3. Dispositif d'émission/réception (12 ; 32) selon l'une quelconque des revendications précédentes,
dans lequel le module de retour de mode de fonctionnement (152) est configuré pour insérer le retour (R_S) dans le signal d'émission numérique (TxD) après la commutation du mode de fonctionnement (Z_SL ; Z_F_RX ; Z_F_ZX) qui a été signalée par le signal de commutation de mode de fonctionnement (RxD_TC), ou
dans lequel le module de retour de mode de fonctionnement (152) est configuré pour insérer le retour (R_S) dans le signal d'émission numérique (TxD) après le signal de commutation de mode de fonctionnement (RxD_TC) mais avant la commutation du mode de fonctionnement (Z_SL ; Z_F_RX ; Z_F_ZX) qui a été signalée par le signal de commutation de mode de fonctionnement (RxD_TC).

4. Dispositif d'émission/réception (12 ; 32) selon la revendication 3, dans lequel le module de retour de mode de fonctionnement (152) est configuré pour appliquer le retour (R_S) plus fortement au début qu'à la fin du retour (R_S).

5. Dispositif d'émission/réception (12 ; 32) selon la revendication 3 ou 4, dans lequel le module de retour de mode de fonctionnement (152) est configuré pour insérer le retour (R_S) dans le signal d'émission numérique (TxD) sous la forme d'au moins une impulsion (AH_1) d'une valeur qui est l'inverse d'une valeur du signal d'émission numérique (TxD).

6. Dispositif d'émission/réception (12 ; 32) selon la revendication 5, dans lequel ladite au moins une impulsion (AH_1) dure jusqu'à un changement de flanc suivant sur le bus (40) qui suit dans le signal d'émission numérique (TxD).

7. Dispositif d'émission/réception (12 ; 32) selon l'une quelconque des revendications précédentes,
comprenant en outre un bloc de commutation de mode de fonctionnement (126) qui est relié à la deuxième borne pour évaluer le signal de commutation de mode de fonctionnement (RxD_TC) reçu à la deuxième borne du dispositif de commande de communication (11 ; 31) pour une commutation du mode de fonctionnement (Z_SL ; Z_F_RX ; Z_F_ZX),
dans lequel le bloc de commutation de mode de fonctionnement (126) est configuré pour commuter le module d'émission (121) et/ou le module de réception (122) en fonction d'un résultat de l'évaluation sur l'un parmi au moins trois modes de fonctionnement (Z_SL ; Z_F_RX ; Z_F_ZX) différents.

8. Dispositif d'émission/réception (12 ; 32) selon l'une quelconque des revendications précédentes,
dans lequel le signal de commutation de mode de fonctionnement (RxD_TC) reçu à la deuxième borne du dispositif de commande de communication (11 ; 31) est au moins une impulsion (AH_1) d'une valeur qui est l'inverse d'une valeur du signal de réception numérique (RxD ; RxD_T ; RxD_R),
dans lequel le bloc de commutation de mode de fonctionnement (126) est configuré pour commuter le module de réception (122) du premier mode de fonctionnement (Z_SL) au deuxième mode de fonctionnement (Z_F_RX) lorsque le signal de commutation (RxD_TC) présente une impulsion (AH_1),
dans lequel le bloc de commutation de mode de fonctionnement (126) est configuré pour commuter le module d'émission (121) et le module de réception (122) du premier mode de fonctionnement (Z_SL) au troisième mode de fonctionnement (Z_F_TX) lorsque le signal de commutation (RxD_TC) présente deux impulsions (AH_1),
dans lequel le dispositif d'émission/réception (12 ; 32) dans le deuxième mode de fonctionnement (Z_F_RX) n'est pas l'émetteur du message (45) dans la deuxième phase de communication (453), et
dans lequel le dispositif d'émission/réception (12 ; 32) dans le troisième mode de fonctionnement (Z_F_TX) n'est pas l'émetteur du message (45) dans la deuxième phase de communication (453).

9. Dispositif d'émission/réception (12 ; 32) selon l'une quelconque des revendications précédentes, dans lequel le dispositif d'émission/réception (12 ; 32) est configuré pour émettre en tant que retour (R_S) par l'intermédiaire de la première borne au moins une impulsion qui est différente en polarité et/ou en nombre d'impulsions de ladite au moins une impulsion du signal de commutation de mode de fonctionnement (RxD_TC) à la deuxième borne.

10. Dispositif d'émission/réception (12 ; 32) selon l'une quelconque des revendications précédentes,
dans lequel le module d'émission (121) est configuré pour appliquer au bus (40) dans la première phase de communication (451) des bits des signaux avec un premier temps de bit (T_B1) qui est supérieur au moins du facteur 10 au temps de bit (T_B2) des bits que le module d'émission (121) applique au bus (40) dans la deuxième phase de communication (453), et
dans lequel, pour signaler que la commutation du mode de fonctionnement est à effectuer, le signal de commutation de mode de fonctionnement (RxD_TC) présente par l'intermédiaire de la deuxième borne au moins une impulsion d'une durée (T_B3) qui est inférieure au premier temps de bit (T_B1) et supérieure au deuxième temps de bit (T_B2) ou présente au moins une impulsion d'une durée d'impulsion (T_B3) qui est approximativement égale au deuxième temps de bit (T_B2) ou est inférieure au deuxième temps de bit (T_B2), et
dans lequel, pour signaler que le mode de fonctionnement a été commuté, le retour (R_S) présente par l'intermédiaire de la première borne au moins une impulsion d'une durée (T_B3) qui est inférieure au premier temps de bit (T_B1) et supérieure au deuxième temps de bit (T_B2) ou présente au moins une impulsion d'une durée d'impulsion (T_B3) qui est approximativement égale au deuxième temps de bit (T_B2) ou est inférieure au deuxième temps de bit (T_B2).

11. Dispositif d'émission/réception (12 ; 32) selon l'une quelconque des revendications précédentes, dans lequel le signal (S_SW) reçu du bus (40) dans la première phase de communication (451, 452, 454, 455) est produit avec une couche physique différente que le signal (S_SW) reçu du bus (40) dans la deuxième phase de communication (453).

12. Dispositif d'émission/réception (12 ; 32) selon l'une quelconque des revendications précédentes, dans lequel dans la première phase de communication (451, 452, 454, 455), on négocie laquelle des stations d'abonné (10, 20, 30) du système de bus (1) obtiendra dans la deuxième phase de communication (453) consécutive un accès au bus (40) au moins temporairement exclusif, sans collision.

13. Dispositif de commande de communication (11 ; 31) pour une station d'abonné (10 ; 30) d'un système de bus série (1), comprenant
un module de commande de communication (111) pour produire un signal d'émission (TxD) pour commander une communication de la station d'abonné (10 ; 30) avec au moins une autre station d'abonné (10 ; 20 ; 30) du système de bus (1), dans lequel système de bus (1) au moins une première phase de communication (451, 452, 454) et une deuxième phase de communication (453) sont utilisées pour échanger des messages (45 ; 46) entre des stations d'abonné (10, 20, 30) du système de bus (1),
une première borne pour émettre le signal d'émission (TxD) à un dispositif d'émission/réception (12 ; 32) qui est configuré pour émettre le signal d'émission (TxD) sur un bus (40) du système de bus (1) et dont le mode de fonctionnement peut être commuté selon la fonction de la station d'abonné (10 ; 30) dans la phase de communication (451, 452, 454, 455 ; 453) consécutive,
une deuxième borne pour recevoir un signal de réception numérique (RxD ; RxD_T ; RxD_R) du dispositif d'émission/réception (12 ; 32),
dans lequel le dispositif de commande de communication (11 ; 31) est configuré pour produire un signal supplémentaire (RxD_TC) qui indique au dispositif d'émission/réception (12 ; 32) qu'il faut commuter de son mode de fonctionnement actuel à un autre mode de fonctionnement parmi au moins trois modes de fonctionnement différents, et qui réalise une communication interne entre le module de commande de communication (111) et le dispositif d'émission/réception (12 ; 32),
**caractérisé**
**en ce que** le module de commande de communication (111) est configuré pour émettre au dispositif d'émission/réception (12 ; 32) le signal supplémentaire (RxD_TC) par l'intermédiaire de la deuxième borne dans le signal de réception numérique (RxD ; RxD_T ; RxD_R), et
**en ce que** le module de commande de communication (111) est configuré pour recevoir par l'intermédiaire de la première borne dans le signal d'émission (TxD) du dispositif d'émission/réception (12 ; 32) un retour (R_S) concernant une commutation effectuée du mode de fonctionnement (Z_SL ; Z_F_RX ; Z_F_TX) en raison du signal de commutation de mode de fonctionnement (RxD_TC) et pour évaluer le retour (R_S).

14. Système de bus (1), comprenant
un bus (40), et
au moins deux stations d'abonné (10 ; 20 ; 30) qui sont reliées l'une à l'autre par le bus (40) de telle sorte qu'elles peuvent communiquer en série entre elles et parmi lesquelles au moins une station d'abonné (10 ; 30) présente un dispositif d'émission/réception (12 ; 32) selon l'une quelconque des revendications 1 à 12 ainsi qu'un dispositif de commande de communication (11 ; 31) selon la revendication 13.

15. Procédé de communication dans un système de bus série (1), dans lequel le procédé est effectué avec un dispositif d'émission/réception pour une station d'abonné (10 ; 30) d'un système de bus (1) dans lequel au moins une première phase de communication (451, 452, 454, 455) et une deuxième phase de communication (453) sont utilisées pour échanger des messages (45 ; 46) entre des stations d'abonné (10, 20, 30) du système de bus (1), dans lequel la station d'abonné (10 ; 30) présente un module d'émission (121), un module de réception (122), un bloc de commutation de mode de fonctionnement (126), un bloc de retour de commutation (15 ; 35), une première borne et une deuxième borne, et dans lequel le procédé présente les étapes consistant à
recevoir, à l'aide du module de réception (122), un signal (S_SW) du bus (40) du système de bus (1),
produire, à l'aide du module de réception (122), à partir du signal (S_SW) reçu du bus (40) un signal de réception numérique (RxD ; RxD_T ; RxD_R) et sortir le signal de réception numérique (RxD ; RxD_T ; RxD_R) à la deuxième borne,
**caractérisé par** les étapes consistant à
recevoir, à l'aide d'un bloc de commutation de mode de fonctionnement (126) qui est relié à la deuxième borne, le signal de commutation de mode de fonctionnement (RxD_TC) à la deuxième borne du dispositif de commande de communication (11 ; 31) afin d'évaluer le signal de commutation de mode de fonctionnement (RxD_TC) reçu pour une commutation du mode de fonctionnement (Z_SL ; Z_F_RX ; Z_F_ZX),
détecter, à l'aide du bloc de retour de commutation (15 ; 35), à partir de signaux de sortie du module d'émission (121) et du module de réception (122), dans quel mode de fonctionnement (Z_SL ; Z_F_RX ; Z_F_ZX) sont commutés le module d'émission (121) et le module de réception (122), et
sortir, à l'aide du bloc de retour de commutation (15 ; 35) qui est relié à la première borne, un retour (R_S) concernant une commutation effectuée du mode de fonctionnement (Z_SL ; Z_F_RX ; Z_F_ZX) en raison du signal de commutation de mode de fonctionnement (RxD_TC) par l'intermédiaire de la première borne au dispositif de commande de communication (11 ; 31).
